(19) Europäisches Patentamt / European Patent Office / Office européen des brevets

(11) **EP 3 104 518 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**28.07.2021 Patentblatt 2021/30**

(45) Hinweis auf die Patenterteilung:
**01.08.2018 Patentblatt 2018/31**

(21) Anmeldenummer: **15171461.5**

(22) Anmeldetag: **10.06.2015**

(51) Int Cl.:
$H02P\ 3/12^{(2006.01)}$     $F24F\ 11/00^{(2018.01)}$

(54) **STEUERSCHALTUNG FÜR EINEN SICHERHEITSANTRIEB**

CONTROL CIRCUIT FOR A SAFETY DRIVE

CIRCUIT DE COMMANDE POUR UN ENTRAINEMENT DE SECURITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.12.2016 Patentblatt 2016/50**

(73) Patentinhaber: **Belimo Holding AG**
**8340 Hinwil (CH)**

(72) Erfinder: **GROGG, Silvio**
**8625 Gossau (CH)**

(74) Vertreter: **Rentsch Partner AG**
**Bellerivestrasse 203**
**Postfach**
**8034 Zürich (CH)**

(56) Entgegenhaltungen:
| | |
|---|---|
| EP-A1- 2 573 640 | EP-A1- 2 871 769 |
| WO-A1-2007/134471 | WO-A1-2010/099630 |
| WO-A2-2005/119898 | DE-A1-102011 055 491 |
| US-A1- 2007 170 385 | |

**EP 3 104 518 B2**

**Beschreibung**

**Technisches Gebiet**

Die vorliegende Erfindung betrifft eine Steuerschaltung für einen Sicherheitsantrieb mit einem elektrischen Motor und einer Rücklauffeder. Die vorliegende Erfindung betrifft ferner einen Sicherheitsantrieb mit einer Steuerschaltung sowie ein Verfahren zur Steuerung eines Sicherheitsantriebs. Die vorliegende Erfindung betrifft ferner ein Computerprogrammprodukt zur Steuerung eines Sicherheitsantriebs.

**Stand der Technik**

Sicherheitsantriebe mit elektrischem Motor und Rücklauffeder werden zur Bewegung von Brandschutzklappen eingesetzt, welche in Gebäuden zur Verhinderung einer Brand- und Rauchübertragung in Lüftungskanäle eingebaut werden, beispielsweise in Wände und Decken zwischen Gebäudeabschnitten. Die Brandschutzklappen werden im Brandfall durch den Brandschutzantrieb in eine Sicherheitsstellung gebracht, in welcher die Brandschutzklappe geschlossen ist.

Derartige Sicherheitsantriebe sind im regulären Betrieb, d. h. ohne das Vorliegen eines Brandfalls, mit einem externen elektrischen Versorgungsnetz verbunden und werden durch dieses mit Energie versorgt. Bei diesem Versorgungsnetz kann es sich z. B. um das übliche öffentliche Versorgungsnetz oder ein separates Netz handeln, ebenso um eine unterbrechungsfreie Stromversorgung. Grundsätzlich kann das Versorgungsnetz jegliche zur Energieversorgung des Sicherheitsantriebs geeignete Versorgungsspannungsquelle sein.

Bei Sicherheitsantrieben mit elektrischem Motor und Rücklauffeder beaufschlagt die Rücklauffeder ein mit der Brandschutzklappe gekoppeltes Abtriebsglied des Sicherheitsantriebs fortlaufend mit einer in Richtung der Sicherheitsstellung wirkenden Rückstellkraft. Der Motor wird im regulären Betrieb - d. h. ohne Vorliegen eines Brandfalls - bestromt und bringt eine der Rückstellkraft entgegenwirkende Antriebskraft auf, wobei er aus dem Versorgungsnetz bzw. der Versorgungsspannungsquelle mit Energie versorgt wird. Im stationären Fall - ohne Bewegung der Brandschutzklappe - herrscht dabei ein Gleichgewicht zwischen der Antriebskraft und der Rückstellkraft, so dass die Brandschutzklappe in einer vollständig oder auch teilweise geöffneten Stellung gehalten wird. Eine Bewegung in der von der Sicherheitsstellung wegweisenden Richtung bewirkt zugleich ein Spannen der Rücklauffeder, wohingegen eine Bewegung in Richtung der Sicherheitsstellung die Rücklauffeder entsprechend entspannt. Bei einer Bewegung in Richtung der Sicherheitsstellung läuft der Motor mit.

Es wird darauf hingewiesen, dass bei einem üblichen rotatorischen Antrieb die Antriebskraft und die Rückstellkraft zu entsprechenden Drehmomenten korrespondieren. Das Aufbringen einer Antriebskraft durch den Motor ist damit auch als Aufbringen eines Antriebsmomentes zu verstehen; Für die Rückstellfeder und die Rückstellkraft gilt Entsprechendes. Aus Gründen der Klarheit und Einfachheit wird in diesem Dokument generell der Begriff "Kraft" verwendet.

Im Brandfall wird die Verbindung zum Versorgungsnetz bzw. zur Versorgungsspannungsquelle unterbrochen, was mit Hilfe eines entsprechenden Auslösers, beispielsweise eines thermischen Auslösers bekannter Bauart und/oder einem Rauchsensor oder sonstigen elektronischen Brandsensor erfolgen kann. In Folge der dann wegfallenden motorischen Antriebskraft wird die Brandschutzklappe automatisch durch die Rückstellkraft in die Sicherheitsstellung bewegt, wobei sich die Rücklauffeder entsprechend entspannt. Diese federgetriebene Bewegung in die Sicherheitsstellung wird als Rücklaufbewegung bezeichnet.

Die EP 2871769 A1 sowie die WO 2005119898 A2 offenbaren einen Sicherheitsantrieb mit einem elektrischen Motor, einer Rücklauffeder und einer Steuerschaltung. Die Drehzahl des Motors bei der Rücklaufbewegung wird aus den Nulldurchgängen der Spannung einer nicht kurzgeschlossenen Motorwicklung bestimmt. Durch ein pulsweitenmoduliertes Kurzschliessen der übrigen Motorwicklungen kann dabei die Drehzahl begrenzt werden. Die DE 102011055 491 A1 offenbart einen Servotürschliesser, umfassend eine Abtriebswelle, eine mit der Abtriebswelle wirkverbundene Antriebsmechanik, einen auf die Antriebsmechanik wirkenden mechanischen Energiespeicher zur Speicherung einer Schließenergie für den Türflügel, eine mit der Abtriebswelle wirkverbundene Motor-/Generatoreinheit, und einen mit der Motor-/Generatoreinheit elektrisch verbundenen elektrischen Energiespeicher zur Speicherung einer Unterstützungsenergie für den Türflügel. Ein Anschluss an ein Stromnetz ist dabei ausdrücklich nicht vorgesehen.

**Darstellung der Erfindung**

Während der Rücklaufbewegung wirken aufgrund der freigesetzten Energie der Rücklauffeder grosse Kräfte und Beschleunigungen, welche den Sicherheitsantrieb, beispielsweise ein Brandschutzklappenantrieb, erheblich belasten. Insbesondere wird eine Fortsetzung der Rücklaufbewegung bei Erreichen der Sicherheitsstellung durch einen Anschlag gestoppt, wobei die hierbei auftretenden Bremskräfte und Bremsbeschleunigungen zu mechanischen Beschädigungen führen können. Es ist ein Ziel der vorliegenden Erfindung, das Betriebsverhalten von Sicherheitsantrieben so zu verbessern, dass die Nachteile des Standes der Technik zumindest teilweise vermieden werden. Es ist insbesondere ein Ziel der vorliegenden Erfindung, eine Steuerschaltung für einen Sicherheitsantrieb, einen Sicherheitsantrieb sowie ein Verfahren zur Steuerung eines Sicherheitsantriebs bereitzustellen, welche eine Regelung oder Begrenzung der Antriebsdrehzahl während der Rücklaufbewegung auf robuste und sichere Weise ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Neben dem Antrieb von Brandschutzklappen können Sicherheitsantriebe der oben beschriebenen Bauart und Funktionsweise für weitere Anwendungen eingesetzt werden, bei denen in einem Notfall und ohne Nutzung einer externen Energieversorgung eine definierte Sicherheitsstellung angefahren werden muss. Beispiele hierfür sind Entrauchungsklappen und Sicherheitsventile. Insofern ist in der nachfolgende Beschreibung der Erfindung die Bewegung von Brandschutzklappen exemplarisch und schliesst weitere Anwendungen nicht aus.

Gemäss einem Aspekt werden die Ziele der vorliegenden Erfindung durch Bereitstellung eines Sicherheitsantriebs gemäss Anspruch 1 erreicht.

Die Steuerschaltung ist dazu eingerichtet, eine Frequenz einer im Motor induzierten elektromotorischen Gegenkraft (Gegen-EMK) zu bestimmen und daraus eine Drehzahl des Motors zu bestimmen. Die Steuerschaltung ist ferner dazu eingerichtet, die Drehzahl des Motors während einer durch die Rücklauffeder angetriebenen Rücklaufbewegung durch Ansteuerung des Motors zu regeln oder zu begrenzen.

Die Steuerschaltung ist mittels elektronischer Komponenten in grundsätzlich bekannter Weise realisiert und kann aus diskreten Komponenten, integrierten Schaltkreisen oder einer Kombination hieraus bestehen. In typischen Ausführungsformen umfasst die Steuerschaltung insbesondere ein oder mehre programmierbare Bauelemente, wie Mikrocontroller und/oder ASICS zuzüglich entsprechendem Programmcode. Weitere Bestandteile der Steuerschaltung werden weiter unten im Zusammenhang exemplarischer Ausführungsbeispiele erläutert.

Die Nutzung der im bei der Rücklaufbewegung mitlaufenden Motor induzierten Gegen-EMK ist zur Bestimmung der Motordrehzahl insofern vorteilhaft, als sie den Verzicht auf zusätzliche spezielle Sensoren - wie Tachogeneratoren oder optische oder potentiometrische Drehwinkelgeber - erlaubt. Die Detektion und Auswertung der Frequenz der Gegen-EMK ist insofern vorteilhaft, als diese unmittelbar proportional zur Drehzahl ist und sich mit einfachen Mitteln zuverlässig bestimmen lässt.

In einigen Ausführungsformen ist die Steuerschaltung dazu eingerichtet, die Frequenz der Gegen-EMK durch Detektion ihrer Nulldurchgänge zu bestimmen. In solchen Ausführungsformen enthält die Steuerschaltung einen Nulldurchgangsdetektor. Alternativ zu Nulldurchgängen kann die Steuerung auch die Spitzenwerte der Gegen-EMK mittels eines Spitzenwertdetektors erfassen.

Erfindungsgemäss ist die Steuerschaltung dazu eingerichtet, die Drehzahl des Motors durch Umwandlung von während der Rücklaufbewegung im Motor erzeugter elektrischer Energie in thermische Energie sowie durch Rückspeisung von während der Rücklaufbewegung im Motor erzeugter elektrischer Energie in die Steuerschaltung zu regeln oder zu begrenzen. Die drehzahlregelnde bzw. drehzahlbegrenzende Wirkung ist dadurch begründet, dass sowohl durch die Rückspeisung als auch die Umwandlung in thermische Energie dem Antrieb, insbesondere der Rücklauffeder, überschüssige kinetische Energie entzogen wird.

Eine Rückspeisung in die Steuerschaltung erfolgt durch Laden eines die Steuerschaltung während der Rücklaufbewegung mit elektrischer Energie versorgenden Stützkondensators. Auf diese Weise wird - trotz Ausfalls der externen elektrischen Energieversorgung - eine Speisung und damit ein Betrieb der Steuerschaltung während der Rücklaufbewegung sichergestellt. Eine Umwandlung in thermische Energie kann mittels einer parallel zum Stützkondensator geschalteten Transzorb-Diode (Suppressordiode) erfolgen.

Die Steuerschaltung ist dabei derart ausgelegt, dass die Spannung des Stützkondensators während der Rücklaufbewegung permanent auf einem zum Betrieb der Steuerschaltung ausreichenden vorgegebenen Wert gehalten wird. Wenn und soweit die dem Antrieb auf diese Weise entzogene kinetische Energie zur Regelung oder Begrenzung der Drehzahl nicht ausreichend ist, erfolgt unterstützend eine direkte Umwandlung in thermische Energie. Hierfür überwacht die Steuerschaltung während der Rücklaufbewegung fortwährend die Spannung des Stützkondensators.

In einigen Ausführungsformen ist der Motor ein mehrphasiger, bürstenloser Gleichstrommotor (elektronisch kommutierter Gleichstrommotor oder electronic commutated DC motor, EC Motor) mit mehreren Motorspulen. Die Steuerschaltung umfasst hierfür jede Motorspule des Motors jeweils ein zugeordnetes oberes Schaltelement zur Verbindung eines Anschlusses der Motorspule mit einem gemeinsamen oberen Potential sowie ein zugeordnetes unteres Schaltelement zur Verbindung desselben Anschlusses mit einem gemeinsamen unteren Potential. Das ein und derselben Motorspule zugeordnete obere Schaltelement und untere Schaltelement bilden dabei jeweils eine Halbbrücke grundsätzlich bekannter Bauweise. Die oberen und unteren Schaltelemente werden dabei typischerweise als Halbleiter realisiert, beispielsweise als MOSFETs.

"Gemeinsames Potential" bedeutet in diesem Zusammenhang, dass das obere Potential bzw. das untere Potential für alle Halbbrücken und Motorspulen identisch ist. Jeweils ein Anschluss aller oberen Schaltelemente ist entsprechend mit dem gemeinsamen oberen Potential verbunden und jeweils ein Anschluss aller unteren Schaltelemente ist mit dem gemeinsamen unteren Potential verbunden.

Im regulären Betrieb werden für die Motorbewegung das obere und das untere Schaltelement einer Halbbrücke jeweils im Gegentakt angesteuert, so dass zu jedem Zeitpunkt eines der Schaltelemente geöffnet und das andere geschlossen ist; die Schaltvorgänge sind dabei für die verschiedenen Halbbrücken entsprechend der erforderlichen Kommutierung auf einander abgestimmt bzw. unter einander synchronisiert. Insbesondere kann eine Blockkommutierung erfolgen, bei der benachbarte Motorspulen jeweils um 120° phasenversetzt bestromt werden.

Um dem Sicherheitsantrieb bzw. seiner Rücklauffeder während der Rücklaufbewegung kinetische Energie zu entziehen und damit die Motordrehzahl zu reduzieren oder zu begrenzen, ist die Steuerschaltung dazu ausgelegt, zumindest während eines Teils der Rücklaufbewegung für eine Motorspule nur das zugeordnete untere Schaltelement ohne Gegentakt zu schalten. Insbesondere kann die Steuerschaltung dafür ausgelegt sein, zumindest während eines Teils der Rücklaufbewegung nur das untere Schaltelement zu schalten, während sich das obere Schaltelement fortwährend in geöffneter Stellung befindet.

Insbesondere kann die Steuerschaltung bei einer derartigen Auslegung dazu eingerichtet sein, mindestens eine Motorspule pulsweitenmoduliert kurzzuschliessen und die Frequenz einer in einer weiteren Spule des Motors induzierten Gegen-EMK zu bestimmen. Ist der Motor zweiphasig und besitzt dementsprechend zwei Motorspulen, so kann eine der beiden Spulen moduliert kurzgeschlossenen werden, während die andere Spule zur Erzeugung der Gegen-EMK herangezogen wird. Weist der Motor mehr Phasen und Motorspulen auf, z. B. drei oder sechs Phasen und Motorspulen, so können vorteilhaft mehrere, z. B. zwei von drei Motorspulen gemeinsam durch Ansteuerung nur der zugeordneten unteren Schaltelemente im Gleichtakt, d. h. synchron, pulsweitenmoduliert kurzgeschlossen werden. Die auf diese Weise bewirkte Begrenzung oder Reduktion der Drehzahl wird weiter unten im Zusammenhang eines Ausführungsbeispiels erläutert. Ein pulsweitenmoduliertes Kurzschliessen von Motorspulen wird hier auch als "aktives Bremsen" bezeichnet.

In einigen Ausführungsformen ist die Steuerschaltung dazu eingerichtet, während der Rücklaufbewegung durch Auswertung der Frequenz der Gegen-EMK eine Position eines Abtriebsglieds des Sicherheitsantriebs fortlaufend zu bestimmen. Unter Berücksichtigung des Antriebsdesigns und insbesondere der Untersetzung zwischen Motor und Abtriebsglied kann eine Positionsbestimmung mittels der Frequenz der Gegen-EMK sehr einfach durch Aufaddieren von Motorumdrehungen erfolgen. Auf diese Weise kann die Position des Abtriebsgliedes während der Rücklaufbewegung ohne Rückgriff auf weitere Sensoren, wie optische oder magnetische Encoder oder potentiometrische Drehwinkelgeber ermittelt werden. Eine Positionserfassung ist beispielsweise zur Überwachung und Protokollierung der Rücklaufbewegung vorteilhaft.

In einigen derartigen Ausführungsformen mit Positionsbestimmung ist die Steuerschaltung ferner dazu eingerichtet ist, ein (erneutes) Bestehen einer Verbindung mit einem Versorgungsnetz bzw. einer Versorgungsspannungsquelle während der Rücklaufbewegung zu detektieren und bei (erneutem) Bestehen der Verbindung mit dem Versorgungsnetz bzw. der Versorgungsspannungsquelle das Abtriebsglied durch Bestromung des Motors aus dem externen Versorgungsnetz in eine vorgegebene Sollposition zu bewegen.

Ein solches (erneutes) Bestehen der Verbindung mit dem externen Versorgungsnetz bzw. der Versorgungsspannungsquelle während der Rücklaufbewegung tritt in einigen Fällen auf, wenn tatsächlich kein Brandfall vorliegt, aber die externe Versorgung kurzzeitig unterbrochen ist, beispielsweise aufgrund von Schaltvorgängen im Netz oder - bei einem Ausfall eines öffentlichen primären Netzes - bis zum Anlaufen eines Notstromaggregates oder einer sonstigen Notstromversorgung. Derartige Unterbrüche sind in der Regel deutlich kürzer als die typische Rücklaufzeit von zum Beispiel etwa 20 sec. Ein Sicherheitsantrieb entsprechend der hier dargestellten Ausführungsform gestattet es entsprechend, bei Rückkehr der Versorgung die Rücklaufbewegung mit Hilfe des Motors dynamisch "abzufangen" und das Abtriebsglied in eine vorgegebene Sollposition zu bewegen, ohne das Ende der Rücklaufbewegung abwarten zu müssen. Die angefahrene Sollposition ist typischerweise, aber nicht zwingend, eine Position vor Beginn der Rücklaufbewegung. Eine derartige Ausgestaltung ist vorteilhaft für Sicherheitsantriebe, bei denen das Abtriebsglied und die mit ihm verbundene Brandschutzklappe ausser der Sicherheitsstellung und der gegenüberliegenden Endstellung (Offenstellung) auch eine zwischen diesen liegende Stellungen bei einem Gleichgewicht von Antriebskraft und Rückstellkraft stationär einnehmen kann.

In einigen Ausführungsformen ist die Steuerschaltung dazu eingerichtet, den Antriebesmotor in einer Anfangsphase der Rücklaufbewegung kurzzeitig in eine der Rücklaufbewegung gleichgerichteten Richtung anzusteuern.

Wie zuvor beschrieben, umfasst die Steuerschaltung typischerweise einen Stützkondensator. Aus diesem Stützkondensator erfolgt die Speisung bei Wegfall der Verbindung mit dem Versorgungsnetzes bzw. der Versorgungsspannungsquelle und gewährleistet somit den Weiterbetrieb der Steuerschaltung noch für einen gewissen Zeitraum. Entsprechend der hier beschriebenen Ausführungsform wird zumindest ein Teil der im Stützkondensator gespeicherten Energie genutzt, der Rücklaufbewegung - zusätzlich zur Rücklauffeder - einen Anfangsimpuls mit Hilfe des Motors zu geben, bevor der generatorische Betrieb einsetzt. Dieser Anfangsimpuls ist hilfreich, die vor allem bei selten bewegten Brandschutzklappen häufig erhöhte Stillstandsreibung zu überwinden und die Rücklaufbewegung sicher einzuleiten. Die Bestromung des Motors kann erfolgen, bis die Spannung des Stützkondensators einen vorgegebenen Schwellwert unterschreitet und dauert z. B. etwa 1 ms. Dieses temporäre Unterstützen der Rücklaufbewegung durch den Motor wird auch als "Power-Fail-Kick" bezeichnet.

Gemäss einem weiteren Aspekt werden die Ziele der vorliegenden Erfindung durch Bereitstellung eines Sicherheitsantriebs erreicht. Ein solch erfindungsgemässer Sicherheitsantrieb umfasst ein zwischen einer eine Sicherheitsstellung bildenden Endstellung und einer entgegengesetzten Endstellung bewegbares Abtriebsglied. Ein erfindungsgemässer Sicherheitsantrieb umfasst ferner eine Rücklauffeder zum Antrieb des Abtriebsglieds bei einer Rücklaufbewegung in Richtung der Sicherheitsstellung. Ein erfindungsgemässer Sicherheitsantrieb umfasst ferner einen elektrischen Motor zur Bewegung des Abtriebsglieds entgegen einer von der Rücklauffeder kontinuierlich ausgeübten Kraft in Richtung der entgegengesetzten Endstellung. Ein erfindungsgemässer Sicherheitsantrieb umfasst ferner eine mit dem Motor gekoppelte Steuerschaltung, wie zuvor in allgemeiner Weise und/oder nachfolgend im Zusammenhang von Ausführungsbeispielen näher beschrieben.

Gemäss einem weiteren Aspekt werden die Ziele der vorliegenden Erfindung durch Bereitstellung eines Verfahrens gemäss Anspruch 8 zur Steuerung einer Rücklaufbewegung eines Sicherheitsantriebs erreicht.

In einigen Ausführungsformen umfasst das Verfahren ferner eine Detektion von Nulldurchgängen der Gegen-EMK und ein Bestimmen der Frequenz der Gegen-EMK aus den Nulldurchgängen.

Erfindungsgemäss umfasst das Verfahren ferner ein Umwandeln von während der Rücklaufbewegung im Motor erzeugter elektrischer Energie in thermische Energie, sowie ein Rückspeisen von während der Rücklaufbewegung im Motor erzeugter elektrischer Energie in eine Steuerschaltung des Sicherheitsantriebes.

In einigen Ausführungsformen, in denen der Motor ein mehrphasiger bürstenloser Gleichstrommotor mit mehreren Motorspulen ist und die Steuerschaltung für jede Motorspule jeweils ein zugeordnetes oberes Schaltelement zur Verbindung eines Anschlusses der der Motorspule mit einem gemeinsamen oberen Potential sowie ein zugeordnetes unteres Schaltelement zur Verbindung derselben Anschlusses mit einem gemeinsamen unteren Potential umfasst, umfasst das Verfahren ferner ein Schalten nur des einer Motorspule zugeordneten unteren Schaltelementes ohne Gegentakt, während zumindest eines Teils der Rücklaufbewegung.

In einigen derartigen Ausführungsformen umfasst das Verfahren ferner ein pulsweitenmoduliertes Kurzschliessen von mindestens einer Motorspule und ein Bestimmen der Frequenz einer in einer weiteren Spule des Motors induzierten Gegen-EMK.

In einigen Ausführungsformen umfasst das Verfahren ferner das Detektieren eines (erneuten) Bestehens einer Verbindung mit dem Versorgungsnetz bzw. der Versorgungsspannungsquelle während der Rücklaufbewegung und bei (erneutem) Bestehen der Verbindung mit dem Versorgungsnetz bzw. der Versorgungsspannungsquelle ein Bewegen des Abtriebsglied in eine vorgegebene Sollposition, durch Bestromung des Motors aus dem Versorgungsnetz bzw. der Versorgungsspannungsquelle.

Gemäss einem weiteren Aspekt werden die Ziele der vorliegenden Erfindung durch Bereitstellen eines Computerprogrammprodukts gemäss Anspruch 15 erreicht.

Das nichtflüchtige computerlesbare Medium, welches den Programmcode speichert, kann insbesondere durch einen oder mehrere programmierte oder programmierbare Halbleiterbaustein, wie Mikrocontroller, und/oder durch ASIC(S) realisiert sein.

Bei Sicherheitsantrieben mit elektrischem Motor und Rücklauffeder besteht ferner die Notwendigkeit, bei einer motorischen Bewegung in der von der Sicherheitsstellung wegweisenden Richtung, das Erreichen einer der Sicherheitsstellung entgegengesetzten Endstellung (Offenstellung), in welcher eine weitere Bewegung nicht möglich ist, zu detektieren. Es ist eine weitere Aufgabe der vorliegenden Erfindung, eine weitere Steuerschaltung für einen Sicherheitsantrieb, einen weiteren Sicherheitsantrieb sowie ein weiteres Verfahren zur Steuerung eines Sicherheitsantriebs bereitzustellen, welche eine sichere Detektion des Erreichens der der Sicherheitsstellung entgegengesetzten Endstellung gestatten.

Diese weitere Steuerschaltung ist dazu eingerichtet, den Motor pulsweitemoduliert alternativ zum Betrieb in einem Bewegungsmodus oder einem Haltemodus anzusteuern. Im Bewegungsmodus erfolgt die Ansteuerung dabei derart, dass der Motor eine Antriebskraft aufbringt, welche entgegengesetzt und grösser ist als eine von der Rücklauffeder ausgeübte Rückstellkraft, und so ein Abtriebsglied des Sicherheitsantriebs aus einer Sicherheitsstellung in eine von der Sicherheitsstellung wegweisenden Richtung bewegt. Diese Bewegung endet in einer der Sicherheitsstellung entgegengesetzten Endstellung (Offenstellung). Im Haltemodus erfolgt die Ansteuerung derart, dass der Motor eine geringere Antriebskraft aufbringt, welche das Abtriebsglied entgegen der Rückstellkraft in der der Sicherheitsstellung entgegengesetzten Endstellung (Offenstellung) hält.

Diese Steuerschaltung ist ferner dazu eingerichtet, während der Ansteuerung des Motors im Bewegungsmodus eine Welligkeit einer elektrischen Versorgungsspannung des Motors fortlaufend zu erfassen und bei Überschreitung eines vorgegebenen Welligkeits-Schwellwertes die Ansteuerung des Motors vom Bewegungsmodus in den Haltemodus umzuschalten.

Diese Steuerschaltung ist in einigen Ausführungsformen zur Ansteuerung eines bürstenbehafteten (konventionellen) Gleichstrommotors als Motor ausgelegt. Die Versorgungsspannung des Motors ist dabei eine gegebenenfalls mit einer (Rest-) Welligkeit behaftete Gleichspannung.

In einigen Ausführungsformen umfasst diese Steuerschaltung ferner einen Zeitschalter, welcher eine Laufzeit des Motors im Bewegungsmodus erfasst. Die Ansteuerschaltung ist dann ferner dazu ausgelegt, bei Ablauf bzw. Überschreiten eines Laufzeit-Schwellwertes die Ansteuerung des Motors vom Bewegungsmodus in den Haltemodus umzuschalten.

In einigen Ausführungsformen ist diese Steuerschaltung zur alternativen elektrischen Versorgung des Sicherheitsantriebs aus einem externen Gleichspannungsnetz oder einem externen Wechselspannungsnetz ausgelegt.

In einigen Ausführungsformen ist diese Steuerschaltung ferner dazu ausgelegt, bei Ansteuerung des Motors im Bewegungsmodus und/oder im Haltemodus einen Spannungswert der Versorgungsspannung des Motors zu erfassen und die Ansteuerung des Motors im Bewegungsmodus und/oder im Haltemodus in Abhängigkeit des Spannungswertes der Versorgungsspannung des Motors zu verändern bzw. zu adaptieren.

Ferner ist diese Steuerschaltung in einigen Ausführungsformen dazu ausgelegt, bei Ansteuerung des Motors im Bewegungsmodus und/oder im Haltemodus eine Umgebungstemperatur zu erfassen und die Ansteuerung des Motors im Bewegungsmodus und/oder im Haltemodus in Abhängigkeit der Umgebungstemperatur zu verändern bzw. zu adaptieren.

Weitere Aspekte und Ausführungsformen sind weiter unten im Zusammenhang von Ausführungsbeispielen dargestellt.

Gemäss einem weiteren Aspekt werden die Ziele der vorliegenden Erfindung durch Bereitstellen eines weiteren Verfahrens zur Steuerung eines Sicherheitsantriebs mit einem elektrischen Motor und einer Rücklauffeder erreicht. Das weitere Verfahren umfasst dabei ein pulsweitenmoduliertes Ansteuern des Motors in einem Bewegungsmodus oder alternativ in einem Haltemodus. Das weitere Verfahren umfasst ferner ein fortlaufendes Erfassen einer Welligkeit einer Versorgungsspannung des Motors und ein Umschalten der Ansteuerung des Motors vom Bewegungsmodus in den Haltemodus, wenn die Welligkeit einen Welligkeitsschwellwert überschreitet.

Gemäss einem weiteren Aspekt werden die Ziele der vorliegenden Erfindung durch Bereitstellen eines weiteren Computerprogrammprodukts erreicht. Das weitere Computerprogrammprodukt umfasst ein nichtflüchtiges computerlesbares Medium, welches einen Programmcode speichert, wobei der Programmcode dazu ausgelegt ist, einen Sicherheitsantrieb mit einem elektrischen Motor und einer Rücklauffeder zu steuern. Das Steuern umfasst dabei ein pulsweitenmoduliertes Ansteuern des Motors in einem Bewegungsmodus oder alternativ in einem Haltemodus. Das Ansteuern umfasst ferner ein fortlaufendes Erfassen einer Welligkeit einer Versorgungsspannung des Motors während eines Ansteuerns des Motors im Bewegungsmodus und ein Umschalten der Ansteuerung des Motors vom Bewegungsmodus in den Haltemodus, wenn die Welligkeit einen Welligkeitsschwellwert überschreitet.

Wo im Rahmen der Offenbarung dieses Dokuments spezielle Aspekte ausschliesslich im Zusammenhang technischer Vorrichtungen, insbesondere Steuerschaltungen und Sicherheitsantriebe, erwähnt und/oder diskutiert sind, offenbaren diese zugleich entsprechende Verfahren zur Steuerung eines Sicherheitsantriebs in dem Fachmann offensichtlicher Weise, und umgekehrt. Gleiches gilt für offenbarungsgemässe Computerprogrammprodukte.

**Kurze Beschreibung der Zeichnungen**

Nachfolgend wird eine Ausführung der vorliegenden Erfindung anhand eines Beispieles beschrieben. Das Beispiel der Ausführung wird durch die folgenden beigelegten Figuren illustriert:

| | |
|---|---|
| Figur 1: | zeigt schematisch eine Steuerschaltung zusammen mit verbunden Elementen in einer funktionellen Darstellung. |
| Figur 2: | zeigt schematisch einen Leistungsteil einer Steuerschaltung gemäss Figur 1 gemeinsam mit verbundenen Komponenten. |
| Figur 3: | zeigt schematisch und qualitativ einen Spannungsverlauf, den Drehzahlverlauf sowie die Ansteuerung des Motors durch eine Steuerschaltung gemäss den Figuren 1 und 2. |
| Figur 4a, 4b: | zeigen schematisch einen Stromfluss ein einem Leistungsteil gemäss Figur 2. |
| Figur 5: | zeigt wesentliche Schritte bei der Steuerung eines Sicherheitsantriebs als Flussdiagramm. |
| Figur 6: | zeigt schematisch eine weitere Steuerschaltung zusammen mit verbunden Elementen in einer funktionellen Darstellung. |
| Figur 7: | zeigt wesentliche Schritte beim Betrieb einer weiteren Steuerschaltung gemäss Figur 6 als Flussdiagramm. |

**Wege zur Ausführung der Erfindung**

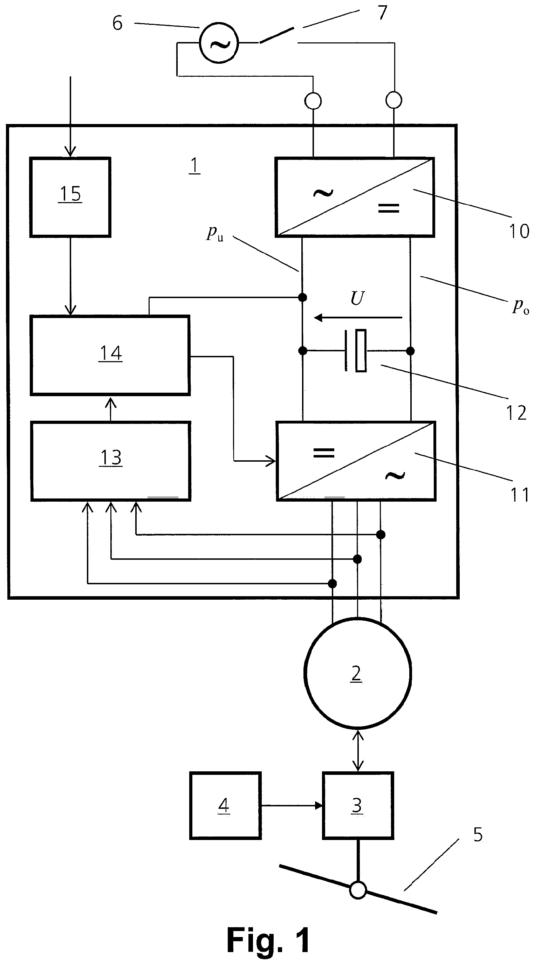

In Figur 1 bezeichnet Bezugszeichen 1 eine Steuerschaltung, Bezugszeichen 2 einen elektrischen Motor, Bezugszeichen 3 ein Getriebe und Bezugszeichen 4 eine Rücklauffeder. Die Steuerschaltung 1, der Motor 2, das optionale Getriebe 3 und die Rücklauffeder 4 sind Bestandteile eines Sicherheitsantriebs. Figur 1 zeigt weiterhin exemplarisch eine mit einem Abtriebsglied des Getriebes 3 wirkverbundene Brandschutzklappe 5 und ein exemplarisches, externes, elektrisches Versorgungsnetz 6 in Form eines üblichen 230V-Wechselspannungsnetzes. Der Anschluss des externen Versorgungsnetzes 6 an die Steuerschaltung 1 erfolgt beispielhaft über einen thermischen Auslöser 7, der den Versorgungsstromkreis im Brandfall unterbricht. Selbstverständlich können alternative andere bekannte Vorrichtungen zur Unterbrechung der Energieversorgung im Brandfall, wie elektronische Temperatur und/oder Rauchgassensoren eingesetzt werden.

Die Darstellung in Figur 1 dient einer übersichtlichen und knappen Darstellung wesentlicher Bestandteile der Steuerschaltung 1 und des funktionellen Zusammenwirkens dieser Bestandteile untereinander sowie mit weiteren Komponenten. Figur1 impliziert keine spezielle oder schaltungstechnische Ausgestaltung. Insbesondere können einzelne funktionale Blöcke durch eine Mehrzahl von Komponenten realisiert werden. Ebenso können mehrer funktionelle Blöcke teilweise oder vollständig durch gemeinsame Komponenten realisiert werden.

Die Steuerschaltung 1 umfasst ein Netzteil 10, ein Leistungsteil 11, einen Stützkondensator 12, ein Gegen-EMK-Modul 13, ein Steuermodul 14 und ein Interface-Modul 15.

Das mit dem externen Versorgungsnetz 6 verbundene Netzteil 10 ist in bekannter Weise realisiert und stellt an seiner Ausgangsseite aus dem Versorgungsnetz 6 eine Gleichspannung $U_0$ von z. B. 24V bereit, welche im regulären Betrieb - d. h. bei verbundenem externen Versorgungsnetz 6 - zur Energieversorgung des Sicherheitsantriebs und insbesondere des Motors 2 dient.

Der hier als dreiphasiger bürstenloser Gleichstrommotor ausgeführte Motor 2 ist über den - auch als Zwischenkreis bezeichneten - Leistungsteil 11 mit dem Netzteil 10 verbunden. Wie nachfolgend näher beschrieben, umfasst der Leistungsteil 3 drei Halbbrücken und dient der Ansteuerung und Bestromung der Motorspulen des Motors 2 entsprechend vom Steuermodul 14 erhaltenen Steuersignalen.

Ein Stützkondensator 12 mit einer Kapazität von z. B. 680μF ist zur Ausgangsseite des Netzteils 10 und der Eingangsseite des Leistungsteils 11 parallel geschaltet. Bei einer Rücklaufbewegung ohne externe Versorgung dient die im Stützkondensator 12 gespeicherte Energie der Versorgung der Steuerschaltung 1 und des Motors 2 und es erfolgt ferner eine Energieeinspeisung in den Stützkondensator 12 aus dem Motor 2.

Die drei Halbbrücken des Leistungsteils 11 sind an die drei Motorspulen des Motors 2 angeschlossen. Ebenfalls mit den drei Motorspulen des Motors 2 ist das Gegen-EMK-Modul 13 verbunden, welches zur Ermittlung und Auswertung der in den Motorspulen induzierten Gegen-EMK dient und ein Eingangssignal für das Steuermodul 14 bereitstellt.

Das Steuermodul 14 stellt die zentrale Steuerinstanz der Steuerschaltung 1 und des Sicherheitsantriebs insgesamt dar. In typischen Ausführungen umfasst das Steuermodul 14 eine oder mehrere programmgesteuerte Komponente(n), wie beispielsweise Mikrocontroller sowie entsprechenden Programmcode in Form von Firmware, und/oder ASIC(s). Daneben kann das Steuermodul 14 sowie weitere Bestandteile der Steuerschaltung 1 aber auch weitere Komponenten, z. B, in Form integrierter Schaltkreise und/oder diskreter elektronischer Komponenten, umfassen.

Das mit dem Steuermodul 14 verbundene optionale Interface-Modul 15 dient dem Empfang eines Sollwertes für die Stellung des Abtriebsgliedes des Sicherheitsantriebs und damit der Brandschutzklappe 5 im regulären Betrieb. Ein solches Signal kann von einer externen Vorrichtung, z. B. einem Bediengerät oder einer zentralen Steuerwarte oder Leitstelle bereitgestellt werden und als Eingangssignal für das Interfacemodul 15 dienen. Alternativ oder zusätzlich können durch das Interface-Modul 15 Signale zum Öffnen bzw. Schliessen der Brandschutzklappe 5 empfangen werden. Das Interface-Modul 15 kann eine oder mehrere Schnittstellen, z. B. eine analoge 0 ...10 V-Schnittstelle, eine 4... 20 mA-Schnittstelle, binäre Eingänge, oder digitale Schnittstellen RS458, Ethernet, CAN, Profibus usw. und zusätzlich oder alternativ proprietäre Schnittstellen bereitstellen. Das Interface-Modul 15 kann ferner leitungsgebundene und/oder drahtlose Schnittstellen, z. B. nach dem Bluetooth-Standard bereitstellen. Neben dem Empfang von Steuersignalen kann das Interface-Modul 15 auch der Ausgabe von Signalen dienen, z. B. einem Ist-Signal des Abtriebsgliedes, und/oder von Stör- und Warnsignalen.

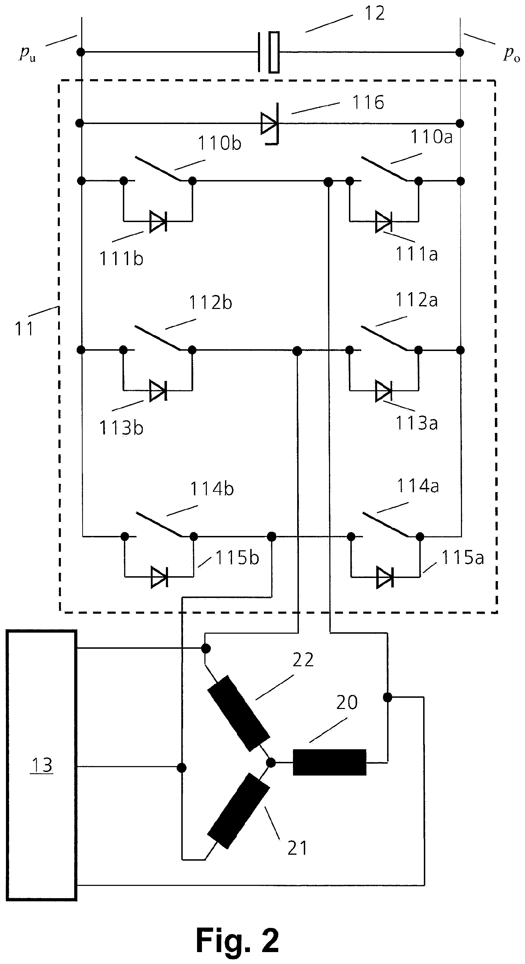

Nachfolgend wird zusätzlich auf Figur 2 Bezug genommen. Figur 2 zeigt schematisch die innere Struktur des Leistungsteils 11 zusammen mit dem Stützkondensator 12, den Spulen 20, 21, 22 des Motors 2 in Sternschaltung sowie dem Gegen-EMK-Modul 13.

Das Leistungsteil 11 umfasst drei Halbbrücken. Jede der drei Halbbrücken umfasst ein oberes Schaltelement 110a, 112a, 114a und ein unteres Schaltelement 110b, 112b, 114b in Serienschaltung. Die oberen Schaltelemente 110a, 112a, 114a sind ferner mit jeweils einem ihrer Anschlüsse galvanisch verbunden, so dass diese Anschlüsse auf einem gemeinsamen oberen Potential $p_o$ liegen; die unteren Schaltelemente 110b, 112b, 114 sind ferner ebenfalls mit einem ihrer Anschlüsse galvanisch verbunden und liegen auf dem gemeinsamen unteren Potential $p_u$. Zwischen dem oberen Potential $p_o$ und dem unteren Potential $p_u$ liegt der Stützkondensator 12, so dass die am Stützkondensator 12 anliegende Kondensatorspannung $U$ der Differenz zwischen dem oberen potential $p_o$ und dem unteren Potential $p_u$ entspricht, also $U = p_o - p_u$ gilt. Im regulären Betrieb ist die Kondensatorspannung $U$ die vom Netzteil 10 bereitgestellte Spannung.

Während die Schaltelemente 110a, 112a, 114a, 110b, 112b, 114b in Figur 2 der Übersichtlichkeit halber und zur Verdeutlichung ihrer Funktion als konventionelle Schalter wiedergegeben sind, handelt es sich in einer praktischen Ausführungsform um HalbleiterElemente in Form von MOSFETs. Der geschaltete Strom zu der jeweils angeschlossenen Motorspule 20, 21, 22 fliesst dabei über die Source- und Drain-Anschlüsse der Schaltelemente 110a, 112a, 114a, 110b, 112b, 114b, während die Steuerung ihres Zustandes, also "leitend" (geschlossen) bzw. "nicht leitend" (offen) vom Potential der vom Steuermodul 14 angesteuerten Gate-Anschlüsse (in Figur 2 nicht dargestellt) bestimmt wird. In diesem Dokument entspricht ein geschlossenes Schaltelement einem leitenden MOSFET, während ein offenes Schaltelement einem nicht leitenden bzw. gesperrten MOSFET entspricht.

Jedem der Schaltelemente 110a, 110b, 112a, 112b, 114a, 114b ist eine Freilaufdiode 111a, 111b, 113a, 113b, 115a, 115b zugeordnet und parallel geschaltet. Die Freilaufdioden 111a, 111b, 113a, 113b, 115a, 115b sind dabei im Normalfall keine separaten Bauelemente, sondern integraler und zwangsläufig vorhandener Bestandteil der MOSFET-Schaltelemente 110a, 110b, 112a, 112b, 114a, 114b.

Im hierin nachfolgend nicht weiter betrachteten regulären Betrieb mit Versorgung durch das externe Versorgungsnetz 6 werden zur Bestromung der Motorspulen 20, 21, 22 die Schaltelemente jeder Halbbrücke im Gegentakt angesteuert, so dass jeweils ein Schaltelement einer Halbbrücke geöffnet und das andere geschlossen ist. Die Bestromung der Motorspulen 20, 21, 22 erfolgt dabei nach dem Prinzip der Blockkommutierung; dabei werden jeweils benachbarte Halbbrücken mit 120° Phasenversatz angesteuert, so dass jeweils benachbarte Motorspulen 20, 21, 22 mit 120° Phasenversatz bestromt werden. Ferner erfolgt die Ansteuerung zur Regelung der Motordrehzahl vorteilhaft pulsweitenmoduliert.

Das Leistungsmodul 11 umfasst ferner eine Transzorb-Diode (Supressordiode) 116 in Parallelschaltung zum Stützkondensator 12. Die Transzorb-Diode 116 ist im regulären Betrieb in Sperrrichtung geschaltet und begrenzt - vergleichbar einer Zenerdiode - die Spannung über den Stützkondensator 12 auf ihre Durchbruchspannung von zum Beispiel 44V. Unterhalb ihrer Durchbruchspannung ist die Transzorb-Diode 116 inaktiv. Wie nachfolgend dargestellt, dient die Transzorb-Diode 116 gemeinsam mit weiteren Elementen des Leistungsteils 11 sowie des Steuermoduls 14 der Drehzahlbegrenzung des Motors 2 während des Federrücklaufs.

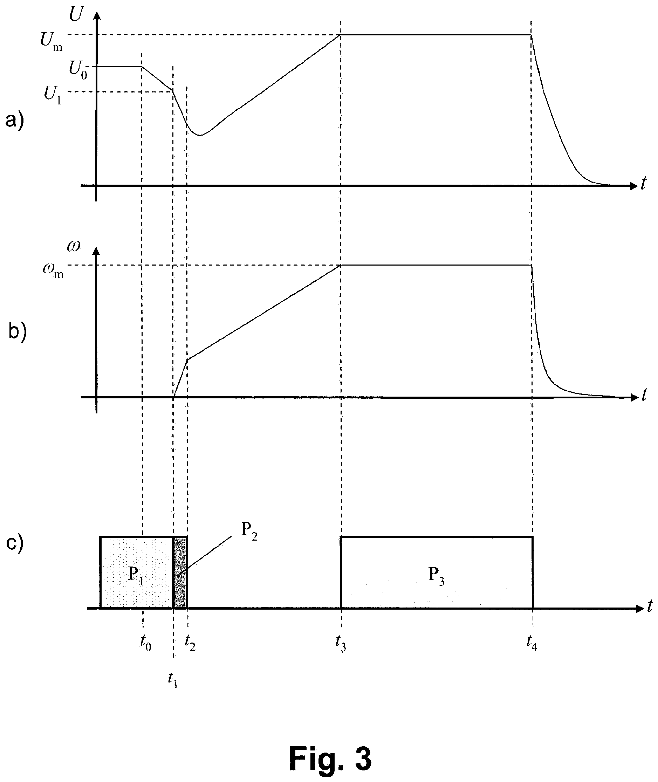

Wird die Verbindung mit dem externen Versorgungsnetz 6 unterbrochen, so kann das Netzteil 10 keine Energie zur Versorgung des Motors 2 mehr bereitstellen. Die Arbeitsweise des Sicherheitsantriebs sowie insbesondere der Steuerschaltung 1 beim nun stattfindenden Federrücklauf wird nachfolgend mit zusätzlichem Bezug auf Figur 3 dargestellt.

Figur 3a und Figur 3b stellen die Kondensatorspannung $U$, sowie die Drehzahl $\omega$ des Motors 2 schematisch und qualitativ in ihrem Zeitverlauf dar.

Es wird hier angenommen, dass die Verbindung zum externen Versorgungsnetz 6 zum Zeitpunkt $t_0$ unterbrochen wird und das externe Versorgungsnetz 6 ab diesem Zeitpunkt den Sicherheitsantrieb nicht mehr mit Energie versorgt. Zu diesem Zeitpunkt ist der Stützkondensator 12 auf den Wert $U_0$ geladen und versorgt für eine kurze Zeitspanne die Steuerschaltung 11 und den Motor 2 weiter mit Energie, so dass sich der Motor 2 zunächst nicht in Bewegung setzt. Da der Stützkondensator 12 nicht mehr nachgeladen wird, beginnt seine Spannung $U$ abzufallen. Ohne weitere Massnahmen würde, sobald die im Stützkondensator 12 gespeicherte Energie nicht mehr ausreicht, den Motor 12 in seiner Position zu halten, ein unkontrollierter und ungeregelter Federrücklauf unter Antrieb der Rücklauffeder 4 stattfinden. Das tatsächliche Verhalten des Sicherheitsantriebs wird durch das Steuermodul 14 wie nachfolgend beschrieben gesteuert.

Bei Unterschreiten eines Spannungsschwellwerts $U_1$ von z. B. 16V (Zeitpunkt $t_1$) wird der Spannungsabfall vom Steuermodul 14 detektiert und der kontrollierte Federrücklauf eingeleitet.

In einer ersten von $t_1$ bis $t_2$ dauernden Phase des Federrücklaufs erfolgt ein Power-Fail-Kick. Das Steuermodul 14 steuert dabei die Schaltelemente 110a, 110b, 112a, 112b, 114a, 114b derart an, dass der Antriebesmotor 2 kurzzeitig die grundsätzlich durch die Rücklauffeder 4 angetriebene Rücklaufbewegung unterstützt, also eine zusätzlich zur durch die Rücklauffeder 4 aufgebrachte Rückstellkraft gleichsinnig wirkende Kraft in Richtung der Sicherheitsstellung generiert. Diese Phase des Power-Fail-Kicks dauert bis zum Zeitpunkt $t_2$. Das Ende des Power-Fail-Kicks erfolgt beispielsweise zeitgesteuert oder durch Unterschreitung eines Spannungs-Schwellwertes oder nach weiteren Kriterien.

Nach Ende des Power-Fail-Kicks, d. h. ab dem Zeitpunkt $t_2$, erfolgt die Rücklaufbewegung unter alleinigem Antrieb durch die Rücklauffeder 4. Das Steuermodul 14 steuert in dieser Phase grundsätzlich keines der Schaltelementente 110a, 110b, 112a, 112b, 114a, 114b, sie sind demnach alle geöffnet. Der Motor 2 läuft dabei mit, wobei sich seine Drehzahl $\omega$ mindestens zu Beginn kontinuierlich erhöht. Entsprechend arbeitet der Motor 2 als dreiphasiger Generator und lädt den Stützkondensator 12 auf, wobei der Stromfluss je nach drehwinkelabgängiger Polarität bzw. Phasenlage der in den Motorspulen 20, 21, 22 induzierten Spannungen und den daraus resultierenden Strömen, über jeweils in Durchlassrichtung orientierte Freilaufdioden 111a, 111b, 113a, 113b, 115a, 115b und den Stützkondensator 112 erfolgt. Das Laden des Stützkondensators 12 über den Motor 2 dient dazu, die Funktion der Steuerschaltung 1 trotz fehlender externer Energieversorgung 6 aufrechtzuerhalten. Zugleich wird dem mechanischen System des Sicherheitsantriebs Energie entzogen und so einem übermässigen Anstieg der Motordrehzahl $\omega$ vorteilhaft entgegengewirkt.

Die Spannung $U$ über den Stützkondensator 12 ist in der hier beschriebenen Phase nicht auf die Betriebsspannung $U_0$ des regulären Betriebs begrenzt, sondern kann über diese hinausgehen. Grundsätzlich begrenzt wird die Spannung $U$ über den Stützkondensator 12 durch die Durchbruchspannung der Transzorb-Diode 116. Bei Überschreiten der Durchbruchspannung in Sperrrichtung wird die Transzorb-Diode 116 leitend und setzt auf diese Weise weitere zugeführte elektrische Energie in thermische Energie um.

Grundsätzlich begrenzt die Transzorb-Diode 116 bereits auf diese Weise die Motordrehzahl $\omega$, wobei die auf diese weise erfolgte Drehzahlbegrenzung unzureichend ist.

Daher erfolgt während der Rücklaufbewegung eine kontinuierliche Überwachung der Motordrehzahl $\omega$ durch das Gegen-EMK-Modul 13 und das Steuermodul 14. Das Gegen-EMK-Modul 13 erfasst die in den Motorspulen 20, 21, 22 aufgrund der Rotorbewegung induzierten Spannungen und bestimmt aus diesen fortlaufend die Motordrehzahl $\omega$. Dies geschieht durch Bestimmung der - zur Motordrehzahl $\omega$ proportionalen - Frequenz der Nulldurchgänge bzw. ihres zeitlichen Abstandes. Die Detektion der Nulldurchgänge kann dabei durch schaltungstechnisch realisierte Nulldurchgangsdetektoren oder durch A/D-Wandlung (Analog/Digital-Wandlung) der Gegen-EMK und Auswertung des digitalisierten Signals erfolgen.

Basierend auf der Auswertung der Gegen-EMK steuert das Steuermodul 14 zwei der drei unteren der Schaltelemente 110b, 112b, 114b falls erforderlich so an, dass die Motordrehzahl $\omega$ auf eine Maximaldrehzahl $\omega_m$ begrenzt wird. Dies wird nachfolgend als "aktives Bremsen" bezeichnet.

Beim aktiven Bremsen bleiben sämtliche oberen Schaltelemente 110, 112a, 114a durchgängig geöffnet. Von den unteren Schaltelementen 110b, 112b, 114b werden zwei pulsweitenmoduliert und zeitsynchron geschlossen, während das Dritte durchgängig geöffnet bleibt. Nachfolgend wird beispielhaft davon ausgegangen, dass die pulsweitenmoduliert geschlossenen Schaltelemente die beiden unteren Schaltelemente 110b, 112b sind, während das weitere untere Schaltelement 114b durchgängig geöffnet bleibt.

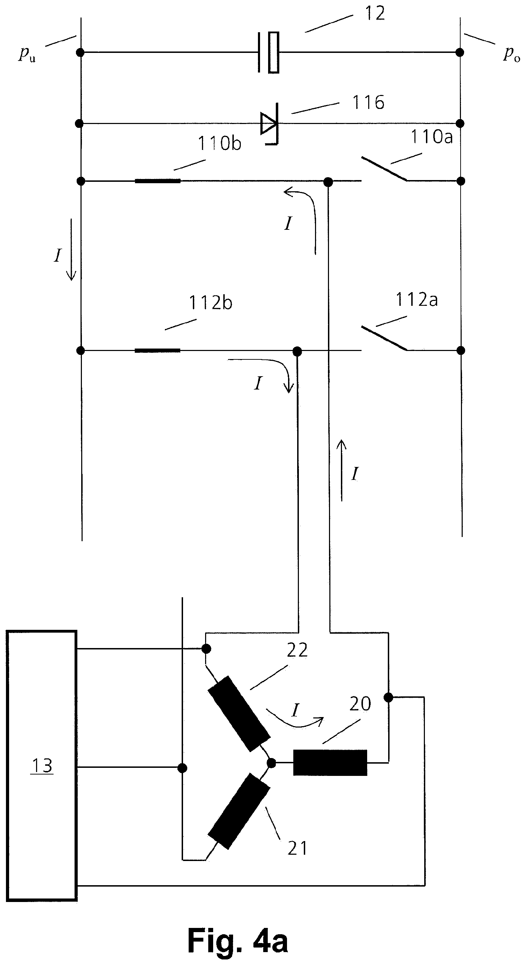

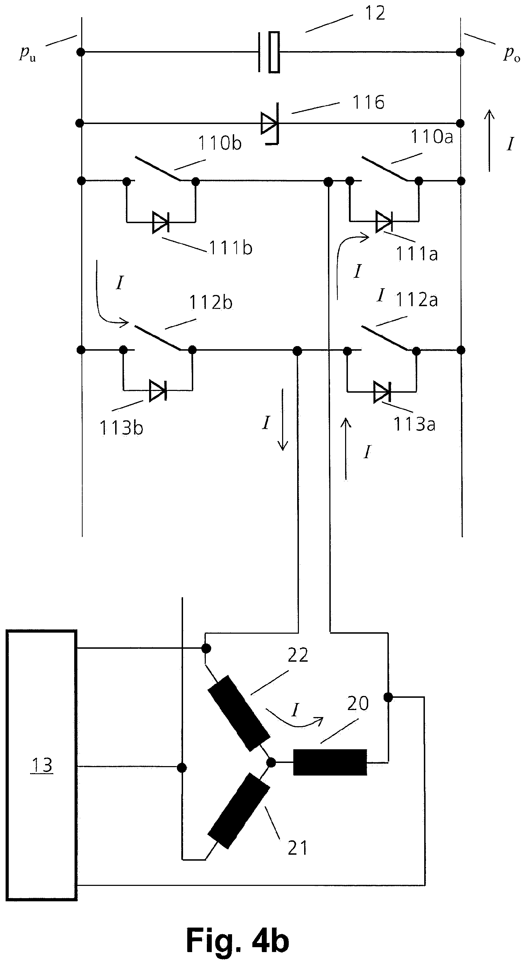

Der Stromfluss beim aktiven Bremsen wird nachfolgend mit zusätzlichem Bezug auf die Figuren 4a und 4b dargestellt. Figur 4a und Figur 4b zeigen jeweils relevante Komponenten der Schaltung aus Figur 2 zusammen mit dem fliessenden Strom $I$.

In Figur 4a sind die beiden unteren Schaltelemente 110b, 112b geschlossen, so dass die beiden Motorspulen 20, 22 in Serie geschaltet und über die geschlossenen Schaltelemente 110b, 112b kurzgeschlossen werden. Entsprechend fliesst aufgrund der in den Moorspulen 20, 22 induzierten Spannung ein Kurzschlussstrom $I$.

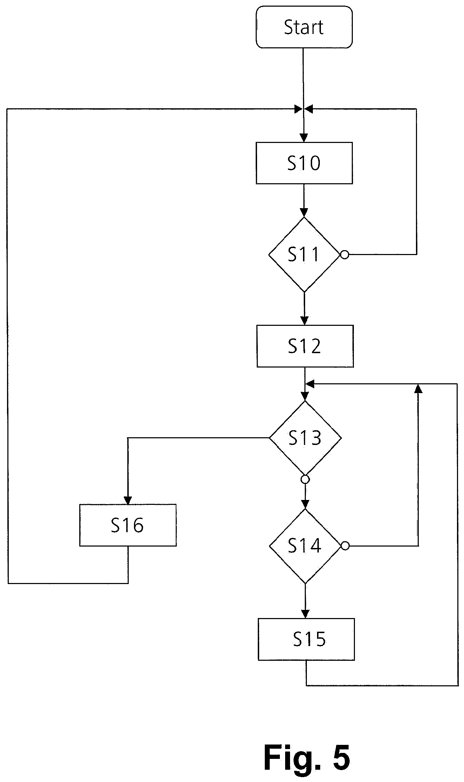

Figur 4b zeigt die Situation bei nachfolgend geöffneten Schaltelementen 110b, 112b. Aufgrund der Stetigkeitsbedingung für Induktivitäten kann der Strom $I$ durch die Motorspulen 20, 22 beim Öffnen der unteren Schaltelemente 110b 112b nicht unmittelbar abbrechen, sondern muss in gleicher Richtung und zunächst gleicher Höhe weiter fliessen. Hierbei erfolgt der Stromfluss über die in Durchlassrichtung geschalteten Freilaufdioden 111a und 113 b der geöffneten Schaltelemente 110a und 112b sowie den Stützkondensator 12 bzw. die Transzorb-Diode 116. Fliesst der Strom $I$ entgegen der in den Figuren 5a, 5b gezeigten Richtung, erfolgt der Stromfluss über die beiden anderen Freilaufdioden 111b, 113a.

Von den drei Motorspulen 20, 21, 22, werden nur die beiden Motorspulen 20, 22 zum aktiven Bremsen genutzt. Mittels der weiteren Motorspule 21 und des Gegen-EMK-Moduls 13 wird dabei die in der Motorspule 21 induzierte Gegen-EMK erfasst und zur Drehzahlbestimmung ausgewertet.

Der hier beschriebene Ansatz lässt sich in analoger Weise auf eine ebenfalls mögliche andere Zahl von Motorspulen übertragen.

In der schematischen Darstellung von Figur 3 ist die Maximaldrehzahl $\omega_m$ zum Zeitpunkt $t_3$ erreicht und wird nachfolgend wie zuvor beschrieben durch aktives Bremsen auf diesen Wert begrenzt.

Zum Zeitpunkt $t_4$ erreicht der Federantrieb die Sicherheitsstellung, wobei die weitere Bewegung durch einen Anschlag mechanisch blockiert wird. Ohne weitere Massnahmen wird hierbei die Bewegung im gesamten Sicherheitsantrieb, einschliesslich des Motors 12, hart gestoppt. Da kein generatorischer Betrieb und damit auch kein Laden des Stützkondensators 12 mehr erfolgt, die Steuerschaltung 1 aber weiterhin aktiv ist und damit Energie verbraucht, bricht die Spannung $U$ für $t > t_4$ zusammen und die Steuerschaltung 1 stellt letztlich den Betrieb ein.

Da das schlagartige Abbremsen des Motors 2 eine die Lebensdauer des Sicherheitsantriebs erheblich verkürzende Belastung darstellt und ggf. auch zu einer Beschädigung führt, ist der Motor 2 bevorzugt mit einem Freilaufritzel ausgestattet. Dieses Freilaufritzel ermöglicht es dem Rotor des Motors 2, sich bei Erreichen der Sicherheitsstellung, wie in Figur 3b dargestellt, aufgrund seiner Energie für $t > t_4$ noch kurzzeitig weiterzudrehen und so einen stetigen Abfall der Motordrehzahl zu bewirken.

In Figur 3c sind zusammenfassend die einzelnen Phasen der Motoransteuerung dargestellt. Bis das Steuermodul 14 den Ausfall der externen Energieversorgung erkennt, d. h. für $t < t_1$, erfolgt eine pulsweitenmodulierte Bestromung der Motorspulen 20, 21, 22 in einer Phase $P_1$ so, dass das Abtriebsglied des Sicherheitsantriebs und damit die Brandschutzklappe 5 eine vorgegebene Sollposition hält und die vom Motor 2 aufgebrachte Antriebskraft, also die von der der Rücklauffeder 4 aufgebrachte Rückstellkraft, kompensiert. In der anschliessenden Phase $P_2$ erfolgt der Power-Fail-Kick, bei dem die Motorspulen 20, 21, 22 so bestromt werden, dass der Motor 2 eine die Rücklaufbewegung unterstützende Kraft generiert. Diese Kraft ist der in der ersten Phase $P_1$ generierten Kraft entsprechend entgegengerichtet. Im Anschluss an den Power-Fail-Kick, d. h. für $t > t_2$ erfolgt grundsätzlich keine aktive Ansteuerung der Motorspulen 20, 21, 22, sondern der Motor 2 arbeitet generatorisch, wobei seine Drehzahl $\omega$ überwacht wird. Ab einem Zeitpunkt $t_3$ wird der Motor 2 durch pulsweitenmoduliertes Kurzschliessen zweier Motorspulen 20, 22 aktiv gebremst, so dass die Motordrehzahl $\omega$ einen vorgegebenen Maximalwert $\omega_m$ nicht überschreitet.

Beim Betrieb eines Sicherheitsantriebs mit Federrücklauf kann es vorkommen, dass das externe Versorgungsnetz 6 nur vorübergehend unterbrochen wird bzw. nicht zur Verfügung steht, aber nach einer relativ kurzen Zeit, insbesondere einer kürzen Zeit als für die vollständige Rücklaufbewegung erforderlich ist, wiederkehrt. In diesem Fall ist es wünschenswert, den Sicherheitsantrieb wieder in den Zustand vor Beginn der Rücklaufbewegung zu versetzten, und insbesondere das Abtriebsglied samt gekoppelter Brandschutzklappe wieder in die vor Begin der Rücklaufbewegung eingenommene Position zu bewegen.

Wie bereits erläutert, kann eine erfindungsgemässe Steuerschaltung derart ausgelegt werden, dass sie die aktuelle Ist-Position des Abtriebsglied durch Auswertung der Gegen-EMK des Motors 2 fortlaufend ermittelt. Damit ist es möglich, bei Rückkehr der externen Energieversorgung während der Rücklaufbewegung das Abtriebsglied wieder in seine vorherige Position (Sollposition) zu bewegen, ohne dass zwischenzeitlich eine konstruktionsgegebene Referenzstellung, z. B. die Sicherheitsstellung, eingenommen werden müsste.

Hierfür ermittelt das Steuermodul während der Rücklaufbewegung fortlaufend die Position des Abtriebsglieds, was in einfacher Weise durch vorzeichenrichtiges Aufsummieren der Motorschritte oder Motorumdrehungen erfolgen kann. Bei erneutem Bestehen der Verbindung zum externen Versorgungsnetz 6 während der Rücklaufbewegung wird die Rücklaufbewegung durch erneute Bestromung des Motors 2 gestoppt und der Motor 2 derart angesteuert, dass die Motorschritte bzw. Motorumdrehungen der Rücklaufbewegungen aufgehoben werden, so dass sich das Abtriebsglied wieder in seiner Stellung vor Beginn der Rücklaufbewegung befindet. In dieser Stellung wird dann der Motor 2 - wie schon zuvor im regulären Betrieb vor Beginn der Rücklaufbewegung - derart angesteuert, dass seine Antriebskraft die von der Rücklauffeder 4 aufgebrachte Rückstellkraft kompensiert.

Figur 5 zeigt wesentliche Schritte der zuvor beschriebenen Steuerung des Sicherheitsantriebes in einem Flussdiagramm. Dabei sind aus Gründen der Knappheit und Übersichtlichkeit lediglich solche Schritte dargestellt, die im Rahmen der Rücklaufbewegung relevant sind.

Es wird angenommen, dass sich der Sicherheitsantrieb zunächst im regulären Betrieb befindet und sein Abtriebsglied eine vorgegebenen Sollstellung einnimmt. In Schritt 10 erfolgt die Ansteuerung des Motors 2 derart, dass die vom Motor 2 aufgebrachte Antriebskraft die von der Rücklauffeder 4 aufgebrachte Rückstellkraft kompensiert und das Abtriebsglied in seiner vorgegebenen Sollstellung verbleibt.

Im nachfolgenden Schritt S11 wird durch Vergleich der Spannung $U$ mit dem Spannungsschwellwert $U_1$ festgestellt, ob die Spannung $U$ den Spannungsschwellwert $U_1$ unterschritten hat. Im negativen Fall wird der Betrieb unverändert mit Schritt S10 fortgesetzt.

Im positiven Fall wird im nachfolgenden Schritt S12 ein Power-Fail-Kick, wie zuvor beschrieben, durchgeführt.

Im Anschluss an den Power-Fail-Kick wird in Schritt S13 durch Vergleich der Spannung $U$ mit der Schwellwertspannung $U_1$ oder einer weiteren Schwellwertspannung festgestellt, ob die externe Energieversorgung 6 wieder zur Verfügung steht und die Spannung $U$ die Schwellwertspannung $U_1$ oder einen weiteren Schwellwertspannung wieder überschreitet. Im positiven Fall wird im nachfolgenden Schritt S16 der Motor 2 derart angesteuert, dass die im Zuge der Rücklaufbewegung erfolgten Motorschritte bzw. Motordrehungen rückgängig gemacht werden. Am Ende von Schritt S16 befindet sich das Abtriebsglied wieder in seiner Sollposition vor Beginn der Rücklaufbewegung und der Betrieb wird mit Schritt S10 zum Halten dieser Position fortgesetzt.

Im negativen Fall, dass heisst ohne Anstieg der Spannung $U$ über die Schwellwertspannung $U_1$ oder eine weitere Schwellwertspannung, wird im nachfolgenden Schritt S14 durch Vergleich der Motordrehzahl $\omega$ mit der Maximaldrehzahl $\omega_m$ bestimmt, ob Letztere überschritten wird. Im positiven Fall erfolgt in Schritt S15 ein vorübergehendes Ansteuern des Motors 2 durch pulsweitenmoduliertes Kurzschliessen der Motorspulen 20, 22 in der zuvor beschriebenen Weise.

Es wird darauf hingewiesen, dass das aktive Bremsen durch pulsweitenmoduliertes Kurzschliessen von Motorspulen hier lediglich aus Gründen der Klarheit derart dargestellt ist, dass ein aktives Bremsen schlagartig bei Überschreiten der Maximaldrehzahl $\omega_m$ erfolgt. In einer praktischen Ausführungsform kann das aktive Bremsen in Abhängigkeit der Motordrehzahl $\omega$ durch kontinuierliche oder schrittweise Anpassung der Pulsweite für das oben beschriebene Kurzschliessen erfolgen. Hierfür können analoge und/oder digitale Regler von dem Fachmann grundsätzlich bekannter Art eingesetzt werden.

Das hier beschriebene zyklische Durchlaufen der Schritte S13, S14 und ggf. S15 wird durchgeführt, bis die Steuerschaltung 1 aufgrund des Zusammenbruchs der Energieversorgung schliesslich ihren Betrieb einstellt.

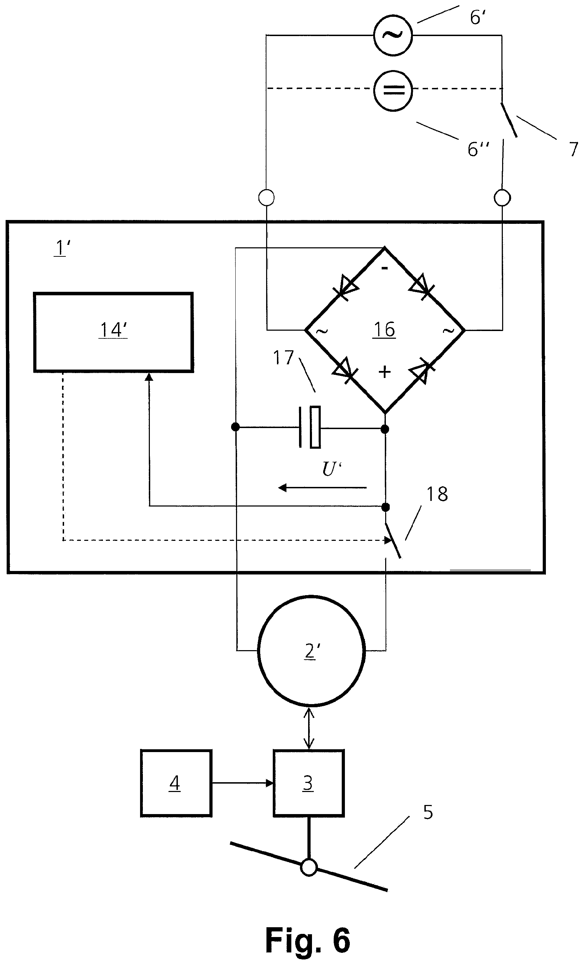

Figur 6 zeigt in schematischer funktioneller Darstellung einen weiteren Sicherheitsantrieb mit einer alternativen Steuerschaltung 1' und verbundenen Komponenten. Nachfolgend nicht näher erläuterte Komponenten sind in grundsätzlich gleicher Weise aufgebaut und arbeiten in gleicher Weise wie zuvor mit Bezug auf Figur 1 beschrieben wurde.

Der in Figur 6 dargestellte Sicherheitsantrieb ist zur Speisung aus einem Wechselspannungsnetz oder einer Wechselspannungsquelle 6' in einem Spannungsbereich von z. B. 21V bis 32V ausgelegt. Mit einem geeigneten Netzteil, insbesondere einem Transformator, kann aber auch eine Versorgung mittels eines üblichen 110 V- oder 230 V-Wechselspannungsnetzes oder eines sonstigen Netzes erfolgen. In einer Variante kann - ohne Modifikation des Sicherheitsantriebs - alternative eine Versorgung aus einem Gleichspannungsnetz bzw. einer Gleichspannungsquelle 6" (DC-Speisung) in einem Bereich von z. B. 24V bis 50V erfolgen.

Der Motor 2' ist im in Figur 6 gezeigten Beispiel ein üblicher Gleichstrommotor mit konventioneller Kommutierung. Alternativ könnte grundsätzlich aber auch ein elektronisch kommutierter bürstenloser Motor wie im Beispiel von Figur 1 eingesetzt werden. Die elektrische Versorgung des Motors 2' mit einer Spannung $U'$ aus der dem Netz bzw. der Quelle 6' oder 6" erfolgt in grundsätzlicher bekannter Weise über einen Brückengleichrichter 16 mit nachgeschaltetem Glättungskondensator 17. Die den Motor 2' versorgende Spannung $U'$ weist dabei eine (Rest-) Welligkeit auf, welche mit steigendem Strom ebenfalls ansteigt.

Die Bestromung und Ansteuerung des Motors 2' erfolgt pulsweitenmoduliert mittels eines Schaltelements 18, welches typischerweise als Halbleiter-Schaltelement, zum Beispiel als MOSFET, realisiert ist. Das Schaltelement 17 und damit die Bestromung des Motors 2' wird durch ein Steuermodul 14' gesteuert. Das Steuermodul 14' kann technisch in grundsätzlich gleicher Weise realisiert werden, wie das Steuermodul 14 in Figur 1, und als zentrales Element insbesondere einen oder mehrere ASIC(s) und oder Mikrocontroller enthalten.

Ferner wird dem Eingang eines Analog/Digital-Wandlers des Steuermoduls 14' die Ausgangsspannung des Brückengleichrichters 17 - ggf. mittels eines nicht dargestellten Spannungsteilers - zugeführt; auf diese Weise erfolgt eine Erfassung des Momentanwertes $u'$ der Spannung $U'$.

Wenngleich weitere Funktionen optional vorhanden sein können, wird nachfolgend davon ausgegangen, dass sein Abtriebsglied und damit eine angeschlossene Brandschutzklappe 5 stationär lediglich zwei Stellungen einnehmen können, die einer vollständig geschlossenen Brandschutzklappe 5 als Sicherheitsstellung und einer entgegengesetzten Endstellung als Offenstellung entsprechen.

Entsprechend des erforderlichen hohen Drehmoments des Motors 2' bzw. der grossen erforderlichen Antriebskraft bei der Bewegung aus der Sicherheitsstellung in die Offenstellung erfolgt die Bestromung des Motors 2' - bezogen auf eine konstante Taktfrequenz - mit einer grossen Pulsweite im Bereich von z. B. 70% (nachfolgend als "Bewegungsmodus" bezeichnet). Zum dynamischen Halten in der Offenstellung erfolgt die Bestromung aus Gründen der Energieeffizienz sowie in Hinblick auf eine möglichst geringe thermische Belastung mit einer geringeren Pulsweite im Bereich von z. B. 20% (nachfolgend als "Haltemodus" bezeichnet). Die Taktfrequenz liegt z. B. bei 23kHz, entsprechend einer Zykluszeit von 43.5$\mu$s.

Die Steuerschaltung 1' und das Steuermodul 14' sind nicht zur Überwachung der Bewegung des Motors 2' ausgelegt. Zur Erkennung des Erreichens der Offenstellung und damit zur Umschaltung der Motoransteuerung vom Bewegungsmodus in den Haltemodus, wertet das Steuermodul 14' die Spannung $U'$ aus. Bei Erreichen der Offenstellung wird der Sicherheitsantrieb insgesamt durch einen Anschlag mechanisch blockiert und damit auch eine weitere Rotation einer Motorwelle des Motors 2' verhindert. Infolge der Blockade steigt bei fortgesetzter Bestromung des Motors 2' dessen Stromaufnahme, was wiederum zu einem Anstieg der Welligkeit der Spannung $U'$ führt.

Das Steuermodul 14' ist derart ausgelegt, dass es den zuvor beschriebenen Anstieg der Welligkeit detektiert und entsprechend bei Überschreiten eines Welligkeits-Schwellwertes die Ansteuerung des Motors 2' vom Bewegungsmodus in den Haltemodus umschaltet. Zur Bestimmung der Welligkeit wird jeweils der Kleinstwert und der Grösstwert des Momentanwertes $u'$ der Spannung $U'$ jeweils über eine Zeit von z. B. 20ms (doppelte Periodenlänge der Welligkeit bei Versorgung aus dem 50 Hz-Netz) mit einem Abtastintervall von z. B. 1 ms erfasst. Die Umschaltung vom Bewegungsmodus in den Haltemodus kann grundsätzlich in einem Schritt erfolgen. Es ist jedoch günstig, eine stufenweise Umschaltung unter Vorsehung mindestens eines Zwischenschrittes vorzunehmen. So kann die Umschaltung z. B. in zwei Stufen mit einer halben Sekunde Abstand erfolgen.

Die hier beschriebene Nutzung des Welligkeits-Anstiegs zur Anschlagdetektion ist nur bei Wechselspannungsversorgung einsetzbar, nicht jedoch bei in einigen Ausführungsformen ebenfalls möglicher Gleichspannungsversorgung. Daher umfasst das Steuermodul 14' optional zusätzlich einen Zeitschalter, welcher mit Beginn der Bewegung aus der Sicherheitsstellung in die Offenstellung gestartet wird und welcher zeitgesteuert nach einer vorgegebenen Laufzeit des Motors 2' die Ansteuerung des Motors 2 vom Bewegungsmodus in den Haltemodus umschaltet. Die Laufzeit des Zeitschalters richtet sich nach der Zeitspanne für eine Bewegung von der Sicherheitsstellung in die Offenstellung und beträgt z. B. 20 sec.

Wie bereits angegeben, kann die Versorgung des Sicherheitsantriebs in beispielhaften Ausführungsformen in einem relativ grossen Bereich variieren und etwa bei 21V bis 32V AC oder alternativ 24V bis 50V DC liegen. Da sich die den Motor 2' versorgende Spannung $U'$ unmittelbar aus der Spannung der Speisung 6' bzw. 6" ergibt und ferner die Motordrehzahl von seiner Versorgungsspannung abhängt, variiert ohne weitere Massnahmen die Zeitdauer für die Bewegung von der Sicherheitsstellung in die Offenstellung entsprechend der Versorgungsspannung, was insbesondere hinsichtlich der zeitgesteuerten Umschaltung zwischen Bewegungsmodus und Haltemodus bei Gleichspannungsversorgung nachteilig ist. Zur Erzielung einer weitgehend konstanten Laufzeit kann die Pulsweite der Motorbestromung entsprechend der Versorgungsspannung angepasst werden. Die relative oder prozentuale Änderung der Pulsweite im Bewegungsmodus kann z. B. linear mit der Spannung *U'* gemäss

$$PW_{\text{Bewegung}} = PW_{\text{max, Bewegung}} - \frac{U - U_{\min}}{k_{\text{Bewegung}}}$$

erfolgen. Dabei bezeichnet $PW_{\text{Bewegung}}$ die relative (prozentuale) Pulsweite im Bewegungsmodus, $PW_{\text{max,Bewegung}}$ die maximale relative (prozentuale) Pulsweite im Bewegungsmodus, z. B. 95%, $U_{\min}$ die minimale Versorgungsspannung, z. B. 22.5V, und $k_{\text{Be-wegung}}$ eine Konstante, z.B.32.

Für eine geringe thermische Belastung im Haltemodus kann eine Berücksichtigung der Spannung *U'* in ähnlicher Weise auch im Haltemodus erfolgen, z. B. gemäss

$$PW_{\text{Halten}} = PW_{\text{max, Halten}} - \frac{U - U_{\min}}{k_{\text{Halten}}}.$$

Dabei bezeichnet $PW_{\text{Halten}}$ die relative (prozentuale) Pulsweite im Haltemodus, $PW_{\text{max,Halten}}$ die maximale relative (prozentuale) Pulsweite im Haltemodus, z. B. 28%, und $k_{\text{Halten}}$ eine Konstante, z. B. 110.

Die Bestimmung der Spannung *U'* durch das Steuermodul 14' erfolgt durch Integration bzw. Mittelung des Momentanwertes *u'*.

Da der ohmsche Widerstand der Motorspule des Motors 2' ferner temperaturabhängig ist, kann vorteilhaft sowohl im Bewegungsmodus als auch im Haltemodus eine Variation bzw. Adaption der Pulsweite in Abhängigkeit der Temperatur erfolgen. Hierfür besitzt das Steuermodul 14' eine Temperaturmesseinrichtung, die z. B. einschliesslich Temperatursensor und nachgeschalteten Komponenten in einen Mikrokontroller integriert sein kann. In einer beispielhaften Ausführung erfolgt eine Anpassung der Pulsweite in Abhängigkeit der Temperatur (Temperaturkompensation) oberhalb einer Schwellwerttemperatur von z. B. 50°C und linear mit der Temperatur, wobei die Temperaturkompensation für den Bewegungsmodus und den Haltemodus gleich oder verschieden sein kann. So kann beispielhaft bei einer Temperatur von 150°C eine Erhöhung um 12.5% im Bewegungsmodus und um 10% im Haltemodus erfolgen.

Die Bestimmung der Spannung *U'* und ihres Momentanwerts *u'* bzw. ihrer Welligkeit und die entsprechende Pulsweitenanpassung erfolgt vorteilhaft sowohl im Bewegungsmodus als auch im Haltemodus fortlaufend bzw. kontinuierlich. Entsprechendes gilt für die Temperaturkompensation.

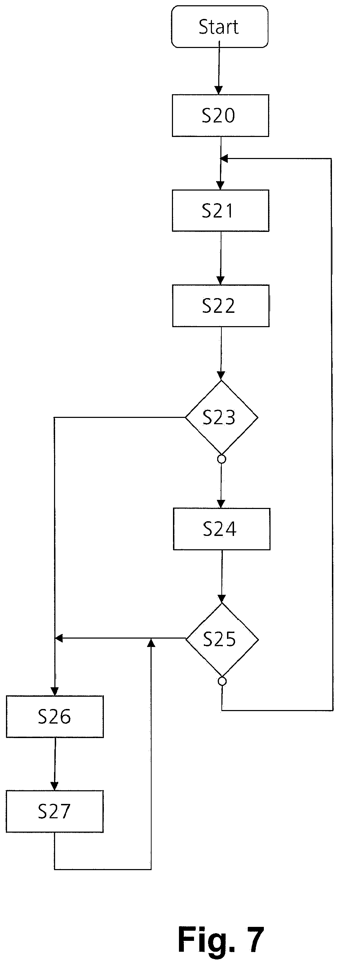

Figur 7 zeigt wesentliche Schritte der zuvor beschriebenen Steuerung eines Sicherheitsantriebs gemäss Figur 6 für die Bewegung von der Sicherheitsstellung in die entgegengesetzte Endstellung (Offenstellung) in einem Flussdiagramm.

Der Ablauf beginnt selbstständig bei der Verbindung der Steuerschaltung 1' mit der externen Speisung 6' bzw. 6". Im initialen Schritt S20 wird der Zeitschalter des Steuermoduls 14' zur zeitgesteuerten Umschaltung vom Bewegungsmodus in den Haltemodus gestartet. Der Zeitschalter kann z. B. als Countdown-Timer realisiert sein.

Im nachfolgenden Schritt S21 erfolgt eine Bestimmung der Spannung *U'* sowie der Temperatur in der zuvor beschriebenen Weise. Ferner wird im Schritt S21 die Pulsweite für die Ansteuerung des Motors 2' im Bewegungsmodus unter Berücksichtigung der Versorgungsspannung und der Temperatur vorgenommen.

Im nachfolgenden Schritt S22 erfolgt eine pulsweitenmodulierte Ansteuerung bzw. Bestromung des Motors 2' und damit eine Bewegung in der von der Sicherheitsstellung wegweisenden Richtung mit der im Schritt S21 bestimmten Pulsweite.

Im nachfolgenden Schritt S23 wird geprüft, ob die Laufzeit des zuvor im Schritt S20 gestarteten Zeitschalters abgelaufen ist. In diesem Fall wird der Ablauf mit dem weiter unten beschriebenen Schritt S26 fortgesetzt. Andernfalls wird der Ablauf mit dem Schritt S24 fortgesetzt.

Im Schritt S24 wird die Welligkeit der Spannung *U'* in der oben beschriebenen Weise bestimmt und im nachfolgenden Schritt S25 geprüft, ob die Welligkeit einen vorgegebenen Welligkeits-Schwellwert überschreitet. In diesem Fall wird der Ablauf ebenfalls mit dem weiter unten beschriebenen Schritt S26 fortgesetzt. Andernfalls wird der Ablauf mit dem oben beschriebenen Schritt S21 fortgesetzt. Damit bildet die Abfolge der Schritte S21, S22, S22, S23, S24, S25 den Bewegungsmodus und werden für die Dauer des Bewegungsmodus zyklisch durchlaufen.

Der Schritt S26 entspricht dem Schritt S21 und dient der Bestimmung der Spannung *U'* sowie der Temperatur in der zuvor beschriebener Weise. Im nachfolgenden Schritt S27 erfolgt eine pulsweitenmodulierte Ansteuerung bzw. Bestromung des Motors 2' zum Halten seiner Stellung. Damit bildet die Abfolge der Schritte S26, S27 den Haltemodus. Die Schritte S26, S27 werden im Haltemodus zyklisch als "Endlosschleife" durchlaufen, solange eine Versorgung durch das Versorgungsnetz 6' oder 6" erfolgt.

Es wird darauf hingewiesen, dass der in Figur 7 dargestellte Ablauf ebenso wie der in Figur 5 dargestellte Ablauf in Hinblick auf eine klare und knappe Darstellung wesentlicher Aspekte vereinfacht und idealisiert ist. Ebenso können jeweils einzelne Schritte vertauscht oder in anderer Reihenfolge durchgeführt werden. So können beispielsweise im Ablauf gemäss Figur 7 die Schritte S24, S25 mit dem Schritt S23 in der Reihenfolge vertauscht werden. Ebenso können verschiedene als sequentieller Ablauf dargestellte Schritte parallel ausgeführt werden. Ferner können bestimmte Schritte bzw. Schrittsequenzen, etwa das Vergleichen mit Schwellwerten, als fortlaufend ausgeführte Interruptroutinen realisiert sein.

## Patentansprüche

1.  Sicherheitsantrieb, umfassend:

    - ein zwischen einer eine Sicherheitsstellung bildenden Endstellung und einer entgegengesetzten Endstellung bewegbares Abtriebsglied;
    - eine Rücklauffeder (4) zum Antrieb des Abtriebsglieds bei einer Rücklaufbewegung in Richtung der Sicherheitsstellung;
    - einen elektrischen Motor (2) zur Bewegung des Abtriebsglieds - entgegen einer von der Rücklauffeder kontinuierlich ausgeübten Kraft - in Richtung der der Sicherheitsstellung entgegengesetzten Endstellung;
    - eine mit dem Motor (2) gekoppelte Steuerschaltung (1);
    - wobei die Steuerschaltung (1) einen Anschluss an ein externes Versorgungsnetz (6) zur Energieversorgung des Sicherheitsantriebs aufweist,
    - wobei die Steuerschaltung (1) dazu eingerichtet ist, eine Frequenz einer im Motor (2) induzierten elektromotorischen Gegenkraft (Gegen-EMK) zu bestimmen und daraus eine Drehzahl des Motors (2) zu bestimmen;
    - und wobei die Steuerschaltung (1) dazu eingerichtet ist, die Drehzahl des Motors (2) während einer durch die Rücklauffeder (4) angetriebenen Rücklaufbewegung durch Ansteuerung des Motors (2) zu regeln oder zu begrenzen;
    - und wobei die Steuerschaltung (1) dazu eingerichtet ist, die Drehzahl des Motors (2) durch Umwandlung von während der Rücklaufbewegung im Motor (2) erzeugter elektrischer Energie in thermische Energie sowie durch Rückspeisung von während der Rücklaufbewegung im Motor (2) erzeugter elektrischer Energie in die Steuerschaltung zu regeln oder zu begrenzen, und durch die Rückspeisung einen Stützkondensator (12) zu laden und so trotz eines Ausfalls der Energieversorgung durch das externe Versorgungsnetz (6) eine Speisung und damit einen Betrieb der Steuerschaltung während der Rücklaufbewegung sicherzustellen.

2.  Sicherheitsantrieb nach Anspruch 1, wobei die Steuerschaltung (1) dazu eingerichtet ist, die Frequenz der Gegen-EMK durch Detektion ihrer Nulldurchgänge zu bestimmen.

3.  Sicherheitsantrieb nach einem der Ansprüche 1 bis 2, wobei der Motor (2) ein mehrphasiger bürstenloser Gleichstrommotor mit mehreren Motorspulen (20, 21, 22) ist und die Steuerschaltung (1) für jede Motorspule (20, 21, 22) des Motors (2) jeweils ein zugeordnetes oberes Schaltelement (110a, 112a, 114a) zur Verbindung eines Anschlusses der Motorspule (20, 21, 22) mit einem gemeinsamen oberen Potential sowie ein zugeordnetes unteres Schaltelement (110b, 112b, 114b) zur Verbindung desselben Anschlusses mit einem gemeinsamen unteren Potential umfasst, und wobei die Steuerschaltung (1) dazu eingerichtet ist, zumindest während eines Teils der Rücklaufbewegung für eine Motorspule (20, 22) nur das zugeordnete untere Schaltelement (110b, 112b) ohne Gegentakt zu schalten.

4.  Sicherheitsantrieb nach Anspruch 3, wobei die Steuerschaltung (1) dazu eingerichtet ist, mindestens eine Spule (20, 22) des Motors (2) pulsweitenmoduliert kurzzuschliessen und die Frequenz einer in einer weiteren Spule (21) des Motors induzierten Gegen-EMK zu bestimmen.

5.  Sicherheitsantrieb nach einem der Ansprüche 1 bis 4, wobei die Steuerschaltung (1) dazu eingerichtet ist, während der Rücklaufbewegung durch Auswertung der Frequenz der Gegen-EMK eine Position eines Abtriebsglieds des Sicherheitsantriebs fortlaufend zu bestimmen.

6.  Sicherheitsantrieb nach Anspruch 5, wobei die Steuerschaltung (1) dazu eingerichtet ist, ein (erneutes) Bestehen einer Verbindung mit einem Versorgungsnetz (6) oder einer Versorgungsspannungsquelle während der Rücklaufbewegung zu detektieren und bei (erneutem) Bestehen der Verbindung mit dem Versorgungsnetz (6) oder der Versorgungsspannungsquelle das Abtriebsglied durch Bestromung des Motors (2) aus dem Versorgungsnetz (6) in eine vorgegebene Sollposition zu bewegen.

7.  Sicherheitsantrieb nach einem der Ansprüche 1 bis 6, wobei die Steuerschaltung (1) dazu eingerichtet ist, den Antriebesmotor (2) in einer Anfangsphase der Rücklaufbewegung kurzzeitig in eine der Rücklaufbewegung gleichgerichteten Richtung anzusteuern.

8.  Verfahren zur Steuerung einer Rücklaufbewegung eines Sicherheitsantriebs mit einem elektrischen Motor (2), einer Steuerschaltung (1) und einer Rücklauffeder (4), das Verfahren umfassend:

    - Bestimmen einer Frequenz einer im Motor (2) induzierten elektromotorischen Gegenkraft (Gegen-EMK);
    - Bestimmen einer Drehzahl des Motors (2) aus der Frequenz der Gegen-EMK;

- Regeln oder Begrenzen einer Drehzahl des Motors (2) während der durch die Rücklauffeder (4) angetriebenen Rücklaufbewegung durch Ansteuern des Motors (2);
- Umwandeln von während der Rücklaufbewegung im Motor (2) erzeugter elektrischer Energie in thermische Energie sowie Rückspeisen von während der Rücklaufbewegung im Motor (2) erzeugter elektrischer Energie in eine Steuerschaltung (1) des Sicherheitsantriebes, und durch die Rückspeisung Laden eines Stützkondensators, und so trotz eines Ausfalls einer Energieversorgung durch ein externes Versorgungsnetz (6) Sicherstellen einer Speisung und damit eines Betriebs der Steuerschaltung während der Rücklaufbewegung.

9. Verfahren nach Anspruch 8, das Verfahren ferner umfassend: Detektion von Nulldurchgängen der Gegen-EMK und Bestimmen der Frequenz der Gegen-EMK aus den Nulldurchgängen.

10. Verfahren nach einem der Ansprüche 8 bis 9, wobei der Motor (2) ein mehrphasiger bürstenloser Gleichstrommotor mit mehreren Motorspulen (20, 21, 22) ist und die Steuerschaltung (1) für jede Motorspule (20, 21, 22) jeweils ein zugeordnetes oberes Schaltelement (110a, 112a, 114a) zur Verbindung eines Anschlusses der Motorspule (20, 21, 22) mit einem gemeinsamen oberen Potential sowie ein zugeordnetes unteres Schaltelement (112b, 112b, 114b) zur Verbindung desselben Anschlusses mit einem gemeinsamen unteren Potential umfasst, das Verfahren ferner umfassend:

Schalten nur des einer Motorspule (20, 22) zugeordneten unteren Schaltelementes (110b, 113b) ohne Gegentakt während zumindest eines Teils der Rücklaufbewegung.

11. Verfahren nach Anspruch 10, das Verfahren ferner umfassend: Pulsweitenmoduliertes Kurzschliessen von mindestens einer Motorspule (20, 22) und Bestimmen der Frequenz einer in einer weiteren Spule (21) des Motors induzierten Gegen-EMK.

12. Verfahren nach einem der Ansprüche 8 bis 11, das Verfahren ferner umfassend: fortlaufendes Ermitteln einer Position eines Abtriebsglieds des Sicherheitsantriebs während der Rücklaufbewegung durch Auswerten der Gegen-EMK.

13. Verfahren nach einem der Ansprüche 8 bis 12, das Verfahren ferner umfassend:

- Detektieren eines (erneuten) Bestehens einer Verbindung mit einem Versorgungsnetz (6) oder einer Versorgungsspannungsquelle während der Rücklaufbewegung;
- bei (erneutem) Bestehen der Verbindung mit dem Versorgungsnetz (6) oder der Versorgungsspannungsquelle: Bewegen des Abtriebsglied in eine vorgegebene Sollposition durch Bestromung des Motors (2) aus dem Versorgungsnetz (6) bzw. der Versorgungsspannungsquelle.

14. Verfahren nach einem der Ansprüche 8 bis 13, das Verfahren ferner umfassend: in einer Anfangsphase der Rücklaufbewegung kurzzeitiges Ansteuern des Antriebsmotors (2) in eine der Rücklaufbewegung gleichgerichtete Richtung.

15. Computerprogrammprodukt umfassend ein nichtflüchtiges computerlesbares Medium, welches einen darin gespeicherten Programmcode umfasst, wobei der Programmcode dazu ausgelegt ist, ein Steuern eines Sicherheitsantriebs gemäss einem der Ansprüche 1 bis 7 durch die Schritte eines Verfahrens gemäss einem der Ansprüche 8 bis 14 auszuführen.

**Claims**

1. Safety drive, comprising:

- an output drive element that can be moved between an end position forming a safety position and an opposite end position;
- a return spring (4) for driving the output drive element during a return movement in the direction of the safety position;
- an electric motor (2) for moving the output drive element - against a force exerted continuously by the return spring - in the direction of the end position opposite to the safety position;
- a control circuit (1) which is coupled to the motor (2) ;
- wherein the control circuit (1) has a connection to an external power supply network (6) for supplying energy to the safety drive;
- wherein the control circuit (1) is configured to determine a frequency of a counter electromotive force (back EMF) induced in the motor (2) and using this to determine a rotation speed of the motor (2);
- and wherein the control circuit (1) is configured to regulate or limit the rotation speed of the motor (2) during a return movement, which is driven by the return spring (4), by controlling the motor (2);
- and wherein the control circuit (1) is configured to regulate or limit the rotation speed of the motor (2) by converting electrical energy generated in the motor (2) during the return movement into thermal energy and by feeding back electrical energy generated in the motor (2) during the return movement into the control circuit, and to charge a backup capacitor (12) by the feeding back and in this way to ensure feeding and therefore operation of the control circuit during the return movement in spite of a failure of the energy supply by the external power supply network (6).

2. Safety drive according to Claim 1, wherein the control circuit (1) is configured to determine the frequency of the back EMF by detecting its zero crossings.

3. Safety drive according to one of Claims 1 to 2, wherein the motor (2) is a multi-phase brushless DC motor with a plurality of motor coils (20, 21, 22) and the control circuit (1) for each motor coil (20, 21, 22) of the motor (2) comprises both an associated upper switching element (110a, 112a, 114a) for connecting a terminal of the motor coil (20, 21, 22) to a common upper potential as well as an associated lower switching element (110b, 112b, 114b) for connecting the same terminal to a common lower potential, and wherein the control circuit (1) is configured to switch only the assigned lower switching element (110b, 112b) without push-pull, at least during part of the return movement for a motor coil (20, 22).

4. Safety drive according to Claim 3, wherein the control circuit (1) is configured to short-circuit at least one coil (20, 22) of the motor (2) in a pulse-width modulated mode and to determine the frequency of a back EMF induced in a further coil (21) of the motor.

5. Safety drive according to one of Claims 1 to 4, wherein the control circuit (1) is configured to continuously determine a position of an output drive element of the safety drive during the return movement, by evaluating the frequency of the back EMF.

6. Safety drive according to Claim 5, wherein the control circuit (1) is designed to detect a (renewed) existence of a connection to a power supply network (6) or a supply voltage source during the return movement, and in the event of the (renewed) existence of the connection to the power supply network (6) or the supply voltage source to move the output drive element into a given target position by supplying current to the motor (2) from the power supply network (6).

7. Safety drive according to one of Claims 1 to 6, wherein the control circuit (1) is configured to activate the drive motor (2) briefly into a direction aligned with the direction of the return movement in an initial phase of the return movement.

8. Method for controlling a return movement of a safety drive with an electric motor (2), a control circuit (1) and a return spring (4), said method comprising:

    - determining a frequency of a counter electromotive force (back EMF) induced in the motor (2);
    - determining a rotation speed of the motor (2) from the frequency of the back EMF;
    - regulating or limiting a rotation speed of the motor (2) during the return movement driven by the return spring (4) by controlling the motor (2);
    - converting electrical energy generated in the motor (2) during the return movement into thermal energy and feeding back electrical energy generated in the motor (2) during the return movement into a control circuit (1) of the safety drive, and charging a backup capacitor by the feeding back, and in this way ensuring feeding and therefore operation of the control circuit during the return movement in spite of a failure of an energy supply by an external power supply network (6).

9. Method according to Claim 8, said method further comprising: detection of zero crossings of the back EMF and determining the frequency of the back EMF from the zero crossings.

10. Method according to one of Claims 8 to 9, wherein the motor (2) is a multi-phase brushless DC motor with a plurality of motor coils (20, 21, 22) and the control circuit (1) for each motor coil (20, 21, 22) comprises both an associated upper switching element (110a, 112a, 114a) for connecting a terminal of the motor coil (20, 21, 22) to a common upper potential as well as an associated lower switching element (112b, 112b, 114b) for connecting the same terminal to a common lower potential, said method further comprising:

    switching only the lower switching element (110b, 113b) assigned to a motor coil (20, 22) without push-pull during at least a part of the return movement.

11. Method according to Claim 10, said method further comprising: pulse-width-modulated short-circuiting of at least one motor coil (20, 22) and determination of the frequency of a back EMF induced in a further coil (21) of the motor.

12. Method according to one of Claims 8 to 11, said method further comprising: continuous determination of a position of an output drive element of the safety drive during the return movement by evaluating the back EMF.

**13.** Method according to one of Claims 8 to 12, said method further comprising:

> - detecting a (renewed) existence of a connection to a power supply network (6) or a supply voltage source during the return movement;
> - in the event of a (renewed) existence of the connection to the power supply network (6) or the supply voltage source: moving the output drive element into a specified target position by supplying current to the motor (2) from the power supply network (6) or the supply voltage source.

**14.** Method according to one of Claims 8 to 13, said method further comprising: in an initial phase of the return movement, brief activation of the drive motor (2) in a direction aligned identically with the return movement.

**15.** Computer program product comprising a non-volatile computer readable medium, which comprises a program code stored therein, wherein the program code is designed to perform a control of a safety drive according to one of Claims 1 to 7 using the steps of a method according to one of Claims 8 to 14.

## Revendications

**1.** Entraînement de sécurité, comprenant:

> - un organe mené pouvant être déplacé entre une position finale, formant une position de sécurité, et une position finale opposée ;
> - un ressort de recul (4) pour entraîner l'organe mené pendant un mouvement de recul en direction de la position de sécurité ;
> - un moteur électrique (2) pour déplacer l'organe de sortie, à l'opposé d'une force exercée en continu par le ressort de recul, en direction de la position finale opposée à la position de sécurité ;
> - un circuit de commande (1) couplé au moteur (2) ;
> - le circuit de commande (1) comportant une connexion à un réseau d'alimentation externe (6) pour alimenter l'entraînement de sécurité en énergie,
> - le circuit de commande (1) étant agencé pour déterminer une fréquence d'une force contre-électromotrice (f.c.é.m) induite dans le moteur (2) et pour déterminer à partir de celle-ci une vitesse de rotation du moteur (2) ;
> - et le circuit de commande (1) étant agencé pour réguler ou limiter le régime du moteur (2) pendant un mouvement de recul entraîné par le ressort de recul (4) par activation du moteur (2) ;
> - et le circuit de commande (1) étant agencé pour réguler ou limiter le régime du moteur (2) par conversion de l'énergie électrique produite dans le moteur (2) pendant le mouvement de recul en énergie thermique ainsi que par récupération de l'énergie électrique produite dans le moteur (2) pendant le mouvement de recul pour l'injecter dans le circuit de commande, et pour charger un condensateur d'appui (12) par la récupération et ainsi assurer une alimentation et donc un fonctionnement du circuit de commande pendant le mouvement de recul malgré une panne de l'alimentation en énergie à travers le réseau d'alimentation externe (6).

**2.** Entraînement de sécurité selon la revendication 1, le circuit de commande (1) étant agencé pour déterminer la fréquence de la force contre-électromotrice par détection de ses passages par zéro.

**3.** Entraînement de sécurité selon l'une des revendications 1 à 2, le moteur (2) étant un moteur à courant continu polyphasé sans balais avec plusieurs bobines de moteur (20, 21, 22) et le circuit de commande (1) pour chaque bobine de moteur (20, 21, 22) du moteur (2) comprenant respectivement un élément de connexion (110a, 112a, 114a) supérieur attribué pour raccordement d'une connexion de la bobine de moteur (20, 21, 22) à un potentiel commun supérieur ainsi qu'un élément de connexion (110b, 112b, 114b) inférieur attribué pour raccordement ladite connexion à un potentiel commun inférieur, et le circuit de commande (1) étant agencé pour connecter au moins pendant partie du mouvement de recul pour une bobine de moteur (20, 22) uniquement l'élément de connexion (110b, 112b) inférieur attribué sans symétrie.

**4.** Entraînement de sécurité selon la revendication 3, le circuit de commande (1) étant agencé pour court-circuiter avec modulation de largeur d'impulsion au moins une bobine (20, 22) du moteur (2) et déterminer la fréquence d'une force contre-électromotrice induite dans une autre bobine (21) du moteur.

**5.** Entraînement de sécurité selon l'une des revendications 1 à 4, le circuit de commande (1) étant agencé pour déterminer en continu pendant le mouvement de recul une position d'un organe mené de l'entraînement de sécurité par exploitation de la fréquence de la force contre-électromotrice.

**6.** Entraînement de sécurité selon la revendication 5, le circuit de commande (1) étant agencé pour détecter une existence (nouvelle) d'une liaison avec un réseau d'alimentation (6) ou une source de tension d'alimentation pendant le mouvement de recul et pour déplacer dans une position théorique prédéfinie en cas d'existence (nouvelle) de la liaison avec le réseau d'alimentation (6) ou de la source de tension d'alimentation, l'organe mené par alimentation en courant du moteur (2) à partir du réseau d'alimentation (6) dans une position théorique prédéfinie.

7. Entraînement de sécurité selon l'une quelconque des revendications 1 à 6, le circuit de commande (1) étant agencé pour activer brièvement le moteur d'entraînement (2) dans une phase initiale du mouvement de recul dans une direction orientée de façon identique au mouvement de recul.

8. Procédé pour la commande d'un mouvement de recul d'un entraînement de sécurité avec un moteur électrique (2), un circuit de commande (1) et un ressort de recul (4), le procédé comprenant :

   - la détermination d'une fréquence d'une force contrélectromotrice induite dans le moteur (2),
   - la détermination d'un régime du moteur (2) à partir de la fréquence de la force contrélectromotrice,
   - la régulation ou limitation d'un régime du moteur (2) pendant le mouvement de recul entraîné par le ressort de recul (4) par activation du moteur (2),
   - la conversion de l'énergie électrique produite dans le moteur (2) pendant le mouvement de recul en énergie thermique ainsi que la récupération de l'énergie électrique produite dans le moteur (2) pendant le mouvement de recul dans un circuit de commande (1) de l'entraînement de sécurité, et la charge d'un condensateur d'appui par la récupération et ainsi la garantie d'une alimentation et donc d'un fonctionnement du circuit de commande pendant le mouvement de recul malgré une panne de l'alimentation en énergie à travers un réseau d'alimentation externe (6).

9. Procédé selon la revendication 8, le procédé comprenant en outre : la détection de passages par zéro de la force contrélectromotrice et la détermination de la fréquence de la force contrélectromotrice à partir des passages par zéro.

10. Procédé selon l'une quelconque des revendications 8 à 9, le moteur (2) étant un moteur polyphasé sans balai avec plusieurs bobines de moteur (20, 21, 22) et le circuit de commande (1) comprenant pour chaque bobine de moteur (20, 21, 22) respectivement un élément de connexion supérieur attribué (110a, 112a, 114a) pour raccordement d'une connexion de la bobine de moteur (20, 21, 22) à un potentiel commun supérieur ainsi qu'un élément de connexion (112b, 112b, 114b) inférieur attribué pour raccordement de ladite connexion à un potentiel commun inférieur, le procédé comprenant en outre :

la connexion uniquement de l'élément de connexion (110b, 113b) inférieur attribué à une bobine de moteur (20, 22) sans symétrie pendant au moins une partie du mouvement de recul.

11. Procédé selon la revendication 10, le procédé comprenant en outre : la mise en court-circuit avec modulation de largeur d'impulsion d'au moins une bobine de moteur (20, 22) et la détermination de la fréquence d'une force contrélectromotrice induite dans une autre bobine (21) du moteur.

12. Procédé selon l'une quelconque des revendications 8 à 11, le procédé comprenant en outre : la détermination continue d'une position d'un organe mené de l'entraînement de sécurité pendant le mouvement de recul en exploitant la force contrélectromotrice.

13. Procédé selon l'une quelconque des revendications 8 à 12, le procédé comprenant en outre :

   - la détection d'une existence (nouvelle) d'une liaison avec un réseau d'alimentation (6) ou une source de tension d'alimentation pendant le mouvement de recul,
   - en cas d'existence (nouvelle) de la liaison avec le réseau d'alimentation (6) ou la source de tension d'alimentation : déplacement de l'organe mené dans une position théorique prédéfinie par alimentation en courant du moteur (2) à partir du réseau d'alimentation (6) ou de la source de tension d'alimentation.

14. Procédé selon l'une quelconque des revendications 8 à 13, le procédé comprenant en outre : dans une phase initiale du mouvement de recul, l'activation de courte durée du moteur d'entraînement (2) dans une direction orientée dans le même sens que le mouvement de recul.

15. Produit à programmation informatisée comprenant un milieu non volatil, lisible par ordinateur, lequel comprend un code de programme mémorisé dedans, le code de programme étant conçu à cet effet pour exécuter une commande d'un entraînement de sécurité selon l'une des revendications 1 à 7 par les étapes d'un procédé selon l'une des revendications 8 à 14.

**Fig. 1**

**Fig. 2**

## Fig. 3

**Fig. 4a**

**Fig. 4b**

Fig. 5

**Fig. 6**

Fig. 7

**EP 3 104 518 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2871769 A1
- WO 2005119898 A2
- DE 102011055491 A1